# EUROPÄISCHE PATENTSCHRIFT

(11) **EP 3 151 948 B1**
(45) Veröffentlichungstag und Bekanntmachung des Hinweises auf die Patenterteilung: **21.12.2022**
(21) Anmeldenummer: 15729771.4
(22) Anmeldetag: 01.06.2015
(51) Int. Cl.: B01D 53/86, C01B 21/40

(54) **VERRINGERUNG DER EMISSION VON STICKOXIDEN BEIM ANFAHREN VON ANLAGEN ZUR HERSTELLUNG VON SALPETERSÄURE**
REDUCING THE EMISSION OF NITROGEN OXIDE WHEN STARTING UP SYSTEMS FOR PRODUCING NITRIC ACID
RÉDUCTION DE L'ÉMISSION D'OXYDES D'AZOTE LORS DU DÉMARRAGE D'INSTALLATIONS DE PRODUCTION D'ACIDE NITRIQUE

(30) Priorität: 04.06.2014 DE 102014210661
(43) Veröffentlichungstag der Anmeldung: 12.04.2017
(73) Patentinhaber: thyssenkrupp Industrial Solutions AG, 45143 Essen (DE); thyssenkrupp AG, 45143 Essen (DE)
(72) Erfinder: PERBANDT, Christian, 44357 Dortmund (DE)
(74) Vertreter: thyssenkrupp Intellectual Property GmbH
(86) Internationale Anmeldenummer: PCT/EP2015/062154
(87) Internationale Veröffentlichungsnummer: WO 2015/185506

(56) Entgegenhaltungen:
- EP-A1- 1 268 040
- EP-A1- 1 497 014
- EP-A1- 2 172 627
- EP-B1- 2 286 897
- DE-A1-102012 010 017
- US-A- 4 869 890
- US-B2- 6 890 501
- "CLEANER NITRIC ACID PLANT TAIL GAS", NITROGEN, BRITISH SULPHUR CO, LONDON, GB, Nr. 207, 1. Januar 1994 (1994-01-01), Seiten 33/34,36-40, XP000423568, ISSN: 0029-0777

## Beschreibung

Die Erfindung betrifft die Verringerung der Emissionen von Stickoxiden, welche während des Anfahrens von Anlagen zur Herstellung von Salpetersäure anfallen. Die Erfindung ermöglicht insbesondere das "farblose" Anfahren von Anlagen zur Herstellung von Salpetersäure.

Zur Herstellung der Salpetersäure wird üblicherweise NH₃ mit Luftsauerstoff katalytisch oxidiert. Das dabei erststehende NO wird mit Sauerstoff zu NO₂ oxidiert und anschließend mit H₂O im Absorptionsturm unter Bildung von HNO₃ absorbiert. Das den Absorptionsturm verlassende Restgas enthält aber noch verschiedene Stickoxide, hauptsächlich NO und NO₂. Diese Stickoxide können während des stationären Betriebs der Anlagen durch etablierte Gasreinigungssysteme aus dem Restgas entfernt werden. Dabei werden NO und NO₂, zusammen bezeichnet als NOₓ, üblicherweise durch SCR (*Selective Catalytic Reduction*)-Verfahren unter Zufuhr geeigneter Reduktionsmittel, wie z.B. Ammoniak, an geeigneten SCR-Katalysatoren, wie z.B. V₂O₅/TiO₂-basierten DeNOx-Katalysatoren, reduziert. Der relative Anteil von NO₂ bezogen auf die molare Gesamtmenge an NOₓ im Restgas wird durch den Oxidationsgrad des NOₓ charakterisiert. Das den Absorptionsturm während des stationären Betriebs der Anlage verlassende NOₓ weist typischerweise einen Oxidationsgrad von ca. 40% auf. Oxidationsgrade von 30 bis 70% eignen sich gut zur Verringerung des Gehalts von NOₓ mit Hilfe etablierter Gasreinigungssysteme an herkömmlichen SCR-Katalysatoren (z.B. auf V₂O₅/TiO₂-Basis), weil dann eine Reduktion nach dem sogenannten *"fast"* SCR-Mechanismus möglich ist. Eine Weiterentwicklung der SCR-Technologie im Bereich der Salpetersäuretechnologie ist das EnviNOx^{®}-Verfahren, bei dem sowohl NOₓ als auch N₂O durch Zufuhr geeigneter Reduktionsmittel besonders wirksam reduziert werden und NOₓ im Abgas in vielen Fällen praktisch nicht mehr nachweisbar ist. Somit ist es den Betreibern von Anlagen zur Herstellung von Salpetersäure möglich, im stationären Betrieb der Anlagen behördlich festgelegte Grenzwerte für Emissionen von NOₓ und N₂O einzuhalten.

Im Unterschied zum stationären Betrieb der Anlagen zur Herstellung von Salpetersäure ist es während des Anfahrens der Anlagen derzeit jedoch nicht möglich, zeitlich begrenzte Emissionen von Stickoxiden zu vermeiden, welche die üblichen Grenzwerte deutlich überschreiten. Ein Teil der Emissionen sind Gase, welche während des Stillstands der Anlage in den Rohrleitungen und Apparaten verblieben sind oder sich darin gebildet haben.

Ein weiterer Teil resultiert aus NOₓ-Ausgasungen aus ungebleichter Salpetersäure (enthält gelöstes NOₓ), welche üblicherweise beim Wiederanfahren der HNO₃-Analge auf den Absorptionsturm zum Füllen desselben aufgegeben wird. Da die Anlagen während des Stillstands üblicherweise auskühlen, liegen die NOₓ aufgrund des thermodynamischen Gleichgewichts bei dieser Temperatur überwiegend als NO₂ vor, welches ab Konzentrationen von ca. 20 ppm im Abgas von Salpetersäureanlagen zunehmend visuell wahrzunehmen ist. Diese NO₂-haltigen Gase werden dann während des Anfahrens der Anlage als braungefärbtes Abgas ausgetragen. Diese Betriebszustände wurden bisher weniger betrachtet, weil sie vergleichsweise selten auftreten und das öffentliche Interesse eher gering war. Aufgrund des zunehmenden Umweltbewusstseins der Bevölkerung und der daraus resultierenden Emissionsgesetze besteht nun zunehmend ein Bedürfnis daran, die Anlagen auch emissionsreduziert oder "farblos" anfahren zu können.

Beim Anfahren aus dem abgeschalteten, ggf. vollständig oder zumindest geringfügig abgekühlten Zustand wird eine Anlage zur Herstellung von HNO₃ üblicherweise mit Hilfe von Kompressoren, welche unter Zufuhr von Fremdenergie, z.B. mit Strom oder Dampf betrieben werden, mit Luft gefüllt und auf Betriebsdruck gebracht ("Aufdrücken"). Dabei erwärmt sich zwar das Restgas am Eintritt des Gasreinigungssystems, die so erreichte Temperatur reicht jedoch noch nicht aus, um das Gasreinigungssystem in Betrieb nehmen zu können. Gasreinigungssysteme, bei denen NH₃ als Reduktionsmittel für das NOₓ eingesetzt wird, können nämlich erst ab einer minimalen Grenztemperatur dauerhaft in Betrieb genommen werden, um die unerwünschte Bildung und Akkumulation von NH₄NO₃ auf dem SCR-Katalysator zu vermeiden. Diese Grenztemperatur liegt häufig im Bereich von 170 bis 200°C. Wegen der noch zu geringen Temperatur des Restgases und auch wegen des ungünstigen Oxidationsgrads des NOₓ wird bei herkömmlichen Anlagen daher das während des Aufdrückens anfallende NOₓ nicht in einem Gasreinigungssystem behandelt, sondern einfach emittiert, oder erst zu einem späteren Zeitpunkt in einem Gasreinigungssystem behandelt, wenn die Restgastemperatur die Schwelle von 170°C bis 200°C bereits deutlich überschritten hat. Nach dem Aufdrücken der HNO₃-Anlage mit Luft, wird dann üblicherweise der Absorptionsturm mit Salpetersäure gefüllt ("Füllen"). Nach dem Beenden des Füllens wird dann die Oxidation von NH₃ gestartet ("Zünden"). Nach dem Zünden steigt die Temperatur des Restgases stetig je nach Typ der HNO₃-Anlage bis auf die stationäre Betriebstemperatur von typischerweise ca. 300°C bis ca. 600°C an und das Gasreinigungssystem kann ohne unerwünschte Bildung und Akkumulation von NH₄NO₃ betrieben werden. Ab diesem Betriebspunkt können dann auch die gesetzlich vorgeschriebenen NOₓ Emissionswerte eingehalten werden.

Es wurden auch Versuche unternommen, die Farblosigkeit der Emissionen von NOₓ während des Anfahrens und Abfahrens der Anlagen durch Einspeisung von zusätzlicher Luft zu erreichen (vgl. WO 03078314A1). Diese Maßnahmen können zwar eine Farblosigkeit der Emissionen bewirken, ohne allerdings dass deren absolute Menge reduziert wird, da das Abgas hier lediglich verdünnt wird. Dabei stellen besonders die relativ großen und zeitlich begrenzten NOₓ-Konzentrationsspitzen mit einem Oxidationsgrad größer 70% während des Aufdrückens und zu Beginn des Füllens der HNO₃-Anlage ein Problem dar, weil das Gasreinigungssystem aufgrund der zu geringen Temperatur zu diesem Stadium noch nicht betrieben werden kann.

Die DE 10 2012 010 017 A1 zeigt beispielsweise ein Verfahren zur Verminderung der Stickoxid-Abgaskonzentration in einer Salpetersäureanlage beim Ab- und/oder beim Anfahren sowie dafür geeignete Salpetersäureanlagen. Dabei ist vorgesehen, dass beim An- oder Abfahren unter Druck stehendes, Stickoxide enthaltendes Abgas aus der Salpetersäure sowie gasförmiges Reduktionsmittel für die Stickoxide in einen mit Katalysator befüllten Reaktor geleitet werden, der zusätzlich zum Reaktor der Restgasreinigung vorgesehen ist. Es ist eine Aufgabe der Erfindung, die Emissionen von Stickoxiden zu reduzieren, welche beim Anfahren von Anlagen zur Herstellung von Salpetersäure anfallen. Diese Aufgabe wird durch den Gegenstand der Patentansprüche gelöst.

Ein erster Aspekt der Erfindung betrifft ein Verfahren zur Verminderung der Konzentration von Stickoxiden (NO, NO₂) im Restgas, welches während des Anfahrens einer Anlage zur Herstellung von Salpetersäure anfällt;
wobei das Restgas NOₓ enthält und wobei das Restgas während des Anfahrens der Anlage anfällt und dabei bevorzugt infolge der Maßnahmen zur Herstellung von Salpetersäure von einer Starttemperatur T₀ unter Durchlaufen einer Grenztemperatur T_{G} schließlich bis auf eine Betriebstemperatur T_{B} erwärmt wird durch Maßnahmen zur Rückgewinnung der bei der Ammoniakoxidation anfallenden Reaktionsenergie im Prozess zur Herstellung von Salpetersäure, bei welcher Betriebstemperatur T_{B} anschließend ein stationärer Betrieb der Anlage erfolgt (T₀ < T_{G} < T_{B});
wobei das Verfahren folgende Schritte umfasst:
   (a) Überleiten des NOₓ-enthaltenden Restgases über ein Speichermedium für NOₓ und Speichern zumindest eines Teils des NOₓ in dem Speichermedium für NOₓ, solange die Temperatur des Restgases kleiner als die Grenztemperatur T_{G} ist;
   (b) ggf. Freisetzen des in Schritt (a) gespeicherten NOₓ, vorzugsweise wenn die Temperatur des Restgases die Grenztemperatur T_{G} erreicht hat;
   (c) Zusammenbringen des NOₓ mit einem Reduktionsmittel für NOₓ in Gegenwart eines SCR-Katalysators in Abhängigkeit einer gemessenen Temperatur des Restgases, nachdem die Temperatur des Restgases die Grenztemperatur T_{G} überschritten hat, aber nicht vorher, wodurch zumindest ein Teil des NOₓ katalytisch reduziert wird, vorzugsweise zu N₂ und H₂O.

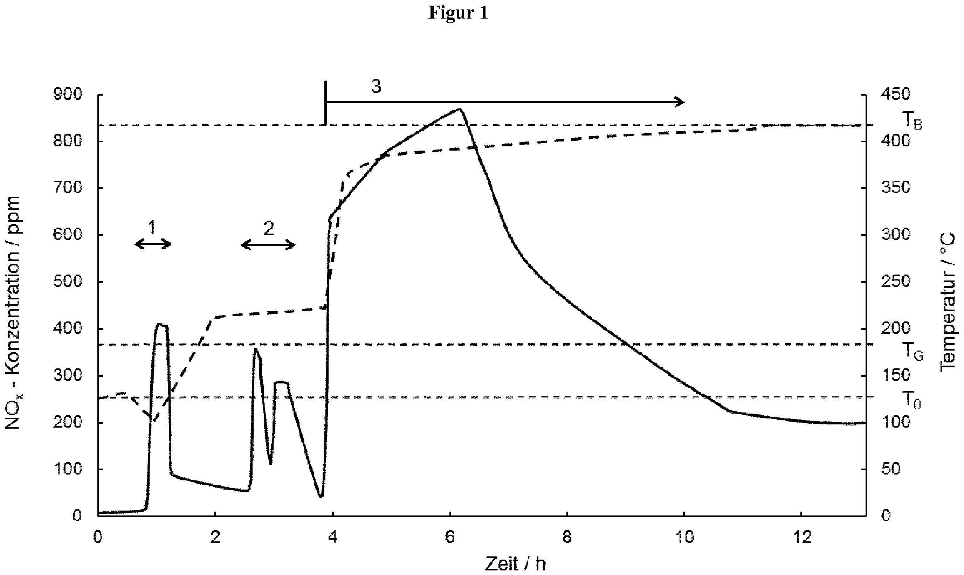

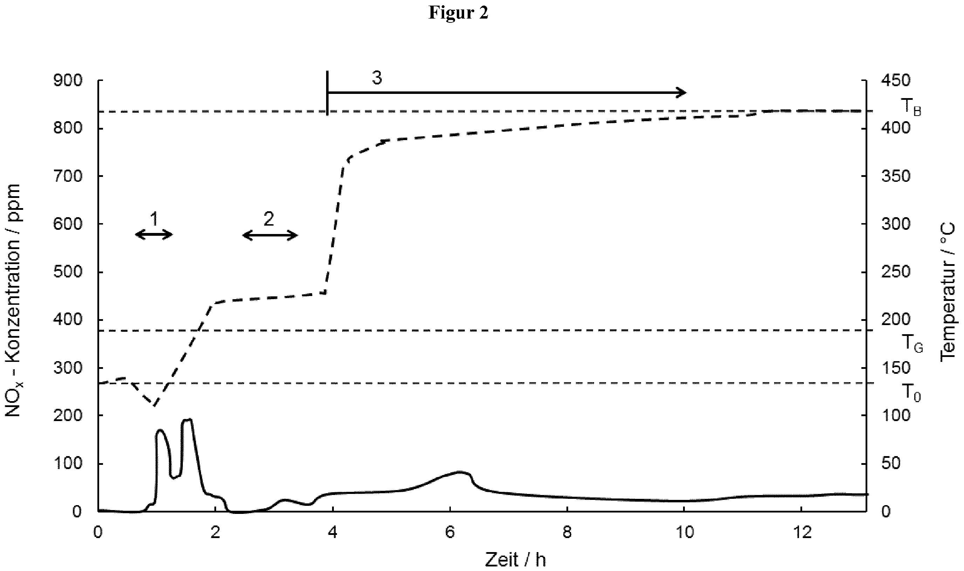

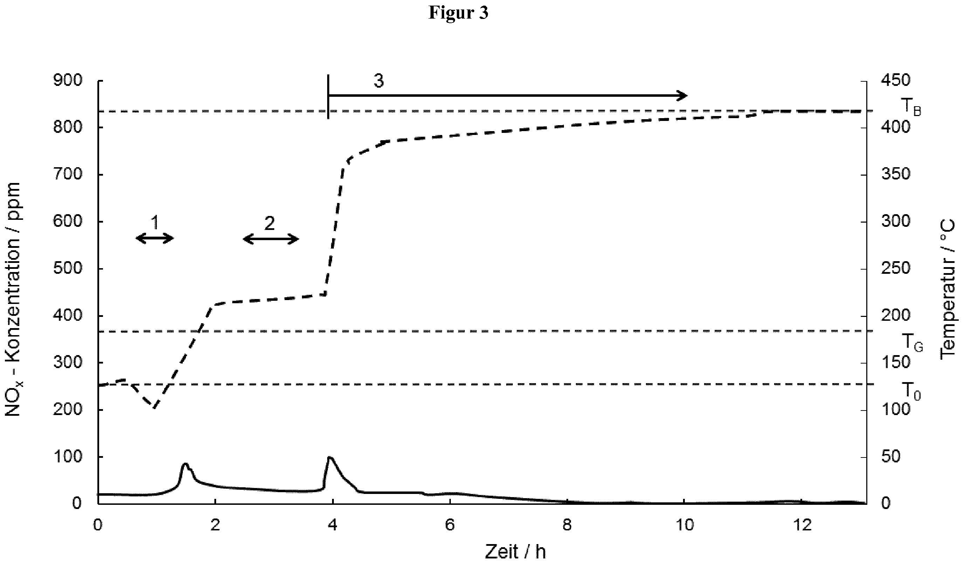

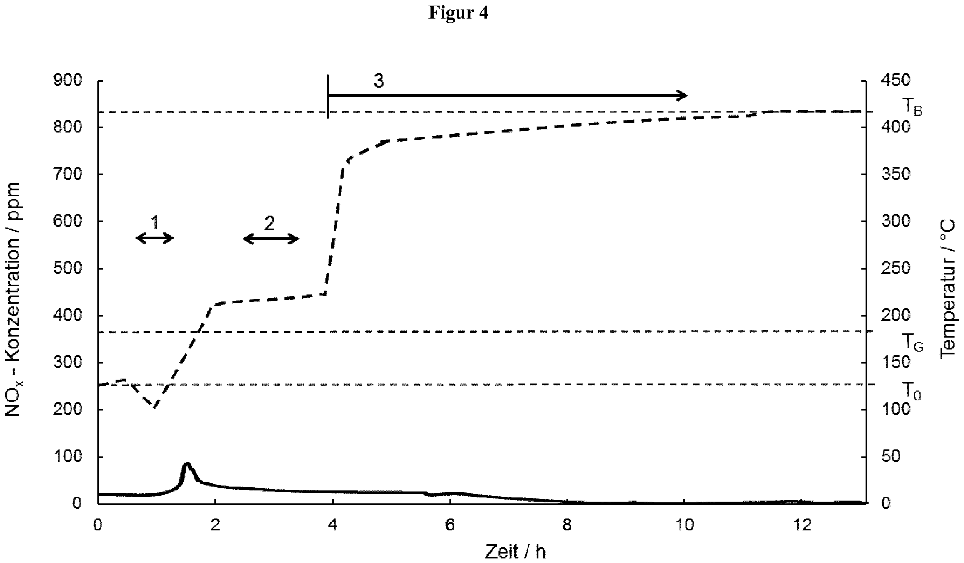

Figuren 1 bis 4 illustrieren schematisch und beispielhaft die Erfindung auf Grundlage experimenteller Daten, welche in Salpetersäureanlagen unterschiedlicher Konfiguration bei unterschiedlicher Verfahrensführung erhoben werden. Figuren 1 und 2 illustrieren herkömmliche Verfahren, Figuren 3 und 4 illustrieren das erfindungsgemäße Verfahren.

Figur 1 zeigt einen typischen zeitlichen Verlauf der NOₓ-Konzentration beim Anfahren der HNO₃-Anlage im Restgas einer Salpetersäureanlage vor Eintritt desselben in ein beliebiges Gasreinigungssystem, welcher damit den potentiellen Emissionsverlauf der HNO₃-Anlage ohne jegliches Gasreinigungssystem beim Anfahren der Anlage darstellt(durchgehende Linie). Ebenfalls dargestellt ist die Temperatur als Funktion der Betriebszeit (unterbrochene Linie). Die Restgastemperatur entspricht zum Zeitpunkt Null der Temperatur, welche sich nach einem Anlagenstillstand eingestellt hat (T₀). Diese ist abhängig von der Umgebungstemperatur und der Stillstandszeit der HNO₃-Anlage und beträgt im Vergleichsbeispiel gemäß Figur 1 ca. 125°C. In Phase 1 wird der Maschinensatz des Luftverdichters bzw. -kompressors gestartet und die Anlage wird mit Luft gefüllt (aufgedrückt). Dabei wird NOₓ, welches sich noch in der Anlage, d.h. in entsprechenden Rohrleitungen und Gasräumen der Apparate, befunden hat, gemäß Peak 1 emittiert. Parallel steigt die Temperatur stetig aufgrund der Verdichtungsarbeit und der eingebrachten Energie aus dem Dampfsystem auf ein Zwischenniveau an, welches von der jeweiligen Anlage abhängt. Dabei wird die Temperatur T_{G} überschritten, welche im Vergleichsbeispiel gemäß Figur 1 ca. 185°C beträgt. Ab dieser Temperatur könnte ein nachgeschaltetes Gasreinigungssystem, grundsätzlich ohne Bildung und Akkumulation von NH₄NO₃ in

Betrieb genommen werden. In Phase 2 wird der Absorptionsturm der Anlage mit ungebleichter Säure gefüllt (enthält gelöstes NOₓ). Dabei wird aufgrund des im Gegensatz zum Normalbetrieb niedrigeren Drucks NOₓ aus der Säure gestrippt (ausgewaschen) und an die Umwelt emittiert. In Phase 3 wird dann mit der eigentlichen Säureproduktion begonnen. Dazu wird NH₃ aufgeschaltet und mit dem Luftsauerstoff an Platin-Netz-Katalysatoren zu NO oxidiert. Aufgrund der freigesetzten Reaktionswärme, welche über Wärmetauscher in das Restgas nach Verlassen des Absorptionsturmes eingebracht wird, steigt die Temperatur hier stetig bis auf die endgültige Betriebstemperatur T_{B} an, die vom Design der Anlage abhängig ist. Im Vergleichsbeispiel gemäß Figur 1 beträgt T_{B} ca. 415°C. Die NOₓ-Emissionen steigen zunächst drastisch an, da die Effektivität des Absorptionsturms noch nicht erreicht ist. Mit fortschreitender Betriebszeit nimmt die Effektivität des Absorptionsturms zu und infolge dessen reduziert sich der NOₓ-Anteil im Abgas.

In Figur 2 ist ein typischer Verlauf der NOₓ-Abgaskonzentration hinter einem installierten klassischen einstufigen Gasreinigungssystem auf Basis eines V₂O₅/TiO₂-Katalyators schematisch dargestellt. Der erste Peak (Phase 1) ist im Vergleich zu Figur 1 geringfügig zu späteren Zeiten verschoben, eine Speicherung von NOₓ im Sinne der Erfindung erfolgt jedoch nicht. Ab der Grenztemperatur T_{G} wird das Gasreinigungssystem dann mit Reduktionsmittel (NH₃) beaufschlagt und auf eine NOₓ-Konzentration am Austritt des Gasreinigungssystems von ca. 30 ppm durch die Variation der NH₃-Menge am Eintritt eingeregelt. Dadurch kann die Emission aus Phase 2 bereits nahezu vollständig beseitigt werden. In Phase 3 kann es allerdings aufgrund des sprunghaften Anstiegs der NOₓ-Eintritts-konzentration zu einem zeitlich begrenzten Anstieg der NOₓ Emission kommen. Im Vergleichsbeispiel gemäß Figur 2 beträgt T₀ ca. 135°C, T_{G} ca. 190°C und T_{B} ca. 415°C.

Figur 3 zeigt eine mit einem EnviNOx^{®}-System als zweistufiges Gasreinigungssystem ausgestattete Salpetersäureanlage beim Anfahren. Im Unterschied zu Figuren 1 und 2 wird die NOₓ-Emission in Phase 1 durch den ausgewählten SCR-Katalysator (mit Eisen beladener Zeolith) durch physikalische Adsorption (Speicherung) vermindert. Mit dem Durchschreiten der Temperatur T_{G} wird erfindungsgemäß Reduktionsmittel (NH₃) auf das System gegeben. Als Folge wird die Gesamtemission an NOₓ im Vergleich zu Figuren 1 und 2 deutlich reduziert. In diesem erfindungsgemäßen Beispiel wird das Reduktionsmittel für die Reduktion des NOₓ allerdings gemäß einer 1:1 Stöchiometrie NH₃:NOₓ im Hinblick auf das kontinuierlich neu hinzukommende NOₓ auf den Reaktor gegeben. Da sich allerdings bereits zuvor eine größere Menge an NOₓ auf dem Katalysator gesammelt hat, die nun in Phase 3 desorbiert wird, reicht die Menge an zugeführtem Reduktionsmittel nicht vollständig dazu aus, die Gesamtmenge an NOₓ zu reduzieren. Folglich kommt es noch zu einem kleineren NOₓ-Peak, d.h. einer NOₓ-Emission aufgrund einer thermisch induzierten Desorption in Phase 3. Im erfindungsgemäßen Beispiel gemäß Figur 3 beträgt T₀ ca. 125°C, T_{G} ca. 185°C und T_{B} ca. 415°C.

Figur 4 zeigt ebenfalls eine mit einem EnviNOx^{®}-System als zweistufiges Gasreinigungssystem ausgestattete Salpetersäureanlage beim Anfahren, wobei das erfindungsgemäße Verfahren gemäß einer bevorzugten Ausführungsform durchgeführt wird. Die NOₓ-Emission in Phase 1 wird wieder aufgrund von physikalischer Adsorption (Speicherung) am SCR-Katalysator (mit Eisen beladener Zeolith) vermindert. Aufgrund der verbesserten NH₃-Dosierung unter Berücksichtigung der Gesamtmenge an NOₓ (bereits am Katalysator adsorbiert + kontinuierlich neu hinzukommend) wird nun soviel Reduktionsmittel dosiert, dass parallel zum neu hinzukommenden NOₓ zusätzlich auch ein Großteil des auf dem Katalysator adsorbierten NOₓ abgebaut wird, bevor die Temperatur in der Phase 3 erhöht wird. Dadurch kann sogar die in Figur 3 dargestellte NOₓ-Desorption praktisch vollständig verhindert werden.

Bei dem erfindungsgemäßen Verfahren enthält das Restgas NOₓ und fällt während des Anfahrens der Anlage zur Herstellung von Salpetersäure an. Dabei ist es nicht zwingend erforderlich, dass das NOₓ-enthaltende Restgas kontinuierlich während des Anfahrens der Anlage anfällt. So ist es erfindungsgemäß ebenso möglich, dass während des Anfahrens der Anlage das Anfallen des NOₓ-enthaltenden Restgases ggf. mehrfach unterbrochen ist, d.h. z.B. in Intervallen erfolgt. Im erfindungsgemäßen Beispiel gemäß Figur 4 beträgt T₀ ca. 125°C, T_{G} ca. 185°C und T_{B} ca. 415°C.

Ein Fachmann kann den Zustand einer Anlage zur Herstellung von Salpetersäure während ihres Anfahrens vom Zustand der Anlage während ihres stationären Betriebs unterscheiden. Vorzugsweise hat das Restgas während des Anfahrens der Anlage seine endgültige Betriebstemperatur T_{B} noch nicht erreicht. Entsprechend hat das Restgas während des sich anschließenden stationären Betriebs der Anlage seine Betriebstemperatur T_{B} erreicht, welche sich danach jenseits üblicher Schwankungen nicht mehr weiter verändert. Das Anfahren der Anlage geht dem stationären Betrieb der Anlage voraus, welcher sich zeitlich direkt an das Anfahren anschließt.

Zu Beginn des Anfahrens der Anlage hat das anfallende Restgas die Starttemperatur T₀. Hat sich die Anlage zuvor nach der letzten Betriebsphase vollständig abgekühlt, so entspricht die Starttemperatur T₀ der Umgebungstemperatur. Es ist erfindungsgemäß jedoch auch möglich, dass die Starttemperatur T₀ oberhalb der Umgebungstemperatur liegt, etwa wenn die Dauer der vorübergehenden Stilllegung der Anlage nach der letzten Betriebsphase nicht für eine vollständige Abkühlung aller Vorrichtungen und Apparaturen ausgereicht hat. Bevorzugt liegt die Starttemperatur T₀ im Bereich von Umgebungstemperatur bis 170°C, bevorzugter von Umgebungstemperatur bis 150°C, noch bevorzugter von Umgebungstemperatur bis 120°C und insbesondere bevorzugt von Umgebungstemperatur bis 100°C.

Im Verlauf des erfindungsgemäßen Verfahrens erfolgt eine Erwärmung des NOₓ-enthaltenden Restgases von der Starttemperatur T₀ unter Durchlaufen einer Grenztemperatur T_{G} schließlich bis auf die Betriebstemperatur T_{B}. Demnach gilt T₀ < T_{G} < T_{B}. Die Erwärmung des NOₓ-enthaltenden Restgases erfolgt bevorzugt im Wesentlichen stetig, kann ggf. jedoch auch geringfügige, temporäre Phasen der relativen Abkühlung umfassen.

Bevorzugt erfolgt die Erwärmung ausschließlich durch Maßnahmen, welche zur Rückgewinnung der bei der Ammoniakoxidation anfallenden Reaktionsenergie im üblichen Prozess der Herstellung von Salpetersäure getroffen werden, d.h. es erfolgt bevorzugt keine zusätzliche, aktive Erwärmung des Restgases durch geeignete Maßnahmen, welche als solche ansonsten nicht in den Prozess zur Herstellung von Salpetersäure integriert wären.

In Schritt (a) des erfindungsgemäßen Verfahrens wird das NOₓ-enthaltende Restgas über ein Speichermedium für NOₓ geleitet und zumindest ein Teil des NOₓ in einem Speichermedium für NOₓ gespeichert, solange die Temperatur des Restgases kleiner als die Grenztemperatur T_{G} ist. Dabei ist es nicht erforderlich, dass NOₓ kontinuierlich über den gesamten Zeitraum, während dessen die Temperatur des Restgases kleiner als die Grenztemperatur T_{G} ist, dem Speichermedium zugeführt und/oder darin gespeichert wird. So reicht es aus, wenn die Speicherung während eines oder mehrerer Intervalle erfolgt, solange die Temperatur des Restgases kleiner als die Grenztemperatur T_{G} ist, und wenn die Speicherung für einen Zeitraum erfolgt, über den die Temperatur des Restgases kleiner als die Grenztemperatur T_{G} ist.

Die Dauer der Speicherung des NOₓ muss nicht über den gesamten Zeitraum erfolgen, während dessen die Temperatur des Restgases von der Starttemperatur T₀ ansteigt, bis sie nur noch geringfügig unterhalb der Grenztemperatur T_{G} liegt. So reicht es erfindungsgemäß grundsätzlich aus, wenn während eines bestimmten Zeitraums, zu dem die Temperatur des Restgases kleiner als die Grenztemperatur T_{G} ist, eine Speicherung zumindest eines Teiles des im Restgas enthaltenen NOₓ in dem Speichermedium erfolgt. Bevorzugt wird zumindest ein Teil des NOₓ in dem Speichermedium zumindest solange gespeichert, bis die Temperatur des Restgases nur noch geringfügig unterhalb der Grenztemperatur T_{G} liegt, beispielsweise 5°C unterhalb von T_{G}.

Ein Fachmann erkennt, dass ein Speicherprozess dynamisch verlaufen kann, d.h. dass NOₓ-Moleküle, welche zu einem frühen Stadium im Speichermedium gespeichert wurden, zu dem die Temperatur des Restgases kleiner als die Grenztemperatur T_{G} ist, zu einem späteren Stadium, zu dem die Temperatur des Restgases ebenfalls kleiner als die Grenztemperatur T_{G} ist, wieder freigesetzt und ggf. durch neue NOₓ-Moleküle ersetzt werden können.

Ferner ist es grundsätzlich möglich, dass die Speicherung zumindest eines Teils des NOₓ zusätzlich auch noch dann erfolgt, wenn die Temperatur des Restgases die Grenztemperatur T_{G} bereits erreicht bzw. überschritten hat.

Als Speichermedium für NOₓ kommen unterschiedliche Apparaturen und Materialien in Betracht.

Bevorzugt erfolgt die Speicherung des NOₓ durch physikalische Adsorption (Physisorption) an der Oberfläche von Festkörpern und/oder durch chemische Adsorption bzw. Absorption (Chemiesorption), d.h. durch chemische Reaktion des NOₓ mit dem Speichermaterial. Bevorzugt umfasst das Speichermedium für NOₓ Festkörper aus anorganischen Materialien.

Zur physikalischen Adsorption eigenen sich insbesondere dem Fachmann bekannte Adsorbentien mit hoher innerer und/oder äußerer spezifischer Oberfläche, wie verschiedene Arten von Aktivkohlen, Aschen, poröse Gläser, Tonerden oder silikatische Materialien, wie Kieselgel, Tonmineralien, z.B. Montmorillonit, Hydrotalzite oder Bentonite, oder insbesondere auch natürliche oder synthetische Zeolithe.

Zur chemischen Adsorption bzw. Absorption eignen sich Materialien, die eine oberflächliche oder auch die ganzen Festkörper durchdingende chemische Reaktion mit NO und/oder vorzugsweise mit NO₂ eingehen. Solche Materialien sind dem Fachmann beispielweise aus dem Bereich der Gasreinigung von automobilen Dieselabgasen bekannt. Dort werden unter der Bezeichnung LNT (*Lean NOₓ Trap*) oder NAC (*NOₓ Absorber Catalyst*) verschiedenste Materialien zur Speicherung und/oder Reduktion von ad- bzw. absorbierten NOₓ-Spezies zum Einsatz gebracht. Beispiele umfassen Alkali- und Erdalkalioxide, wie beispielweise Na₂O, K₂O oder MgO, CaO, SrO, BaO, CaO, welche mit NO₂ je nach Metall bei verschiedenen Temperaturen entsprechende Nitrate bilden, aus welchen dann durch weitere thermische Belastung oder auch durch Zugabe spezifischer Reduktionmittel das NOₓ gemäß dem optionalen Schritt (b) des erfindungsgemäßen Verfahrens wieder freigesetzt werden kann. Besonders bevorzugt im Sinne der Erfindung sind dabei Speichermaterialien, die BaO enthalten, welches gemäß nachstehendem Reaktionsschema NO₂ aufnehmen und reversibel wieder freisetzten kann: BaO + NO₂ 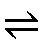 BaNO₃.

Die Speichermaterialien können dabei weitere Komponenten, wie z.B. Dotierungen von Edelmetallen, z.B. von Platin enthalten, welche die Oxidation von NO zu NO₂ katalysieren, so dass diese dann zu den entsprechenden Nitraten abreagieren können. Auch ist eine Dotierung mit SCR-aktiven Übergangsmetallen oder Übergangsmetalloxiden, wie z.B. Rh oder MnO₂ möglich, wie dies ebenfalls aus dem Bereich der Gasreinigung von automobilen Dieselabgasen bekannt ist. In diesem Fall können zur Freisetzung des chemiesorbierten NOₓ aus dem Speichermaterial erfindungsgemäß auch spezifische Reduktionsmittel, wie Ammoniak oder vorzugsweise Kohlenwasserstoffe (HC) oder HC-Gemische zugeführt werden. Dabei erfolgt vorzugsweise eine Reduktion der Nitrat-Spezies zu Stickstoff und Wasser und ggf. CO₂, wie in nachstehendem Reaktionsschema wiedergegeben:

BaNO₃ + HC → BaO + N₂ + H₂O + CO₂.

Neben der Materialauswahl als solcher kann die Speicherkapazität sowohl der chemischen als auch der physikalischen Speichermaterialien durch die Auswahl der spezifischen und geometrischen Oberfläche der Festkörper verändert und eingestellt werden.

Die Speicherung des NOₓ erfolgt insbesondere bei physikalischer Adsorption bei einer niedrigeren Temperatur des Restgases unterhalb der Grenztemperatur T_{G} üblicherweise besser als bei einer höheren Temperatur des Restgases unterhalb der Grenztemperatur T_{G}, da mit ansteigender Temperatur Desorptionsprozesse zunehmen. Bei chemischer Adsorption bzw. Absorption ist zum Ablauf der chemischen Reaktion des NOₓ mit dem Speichermaterial im Allgemeinen eine gewisse Mindesttemperatur zur Überwindung der entsprechenden chemischen Aktivierungsenergien erforderlich.

Ein besonderer Vorteil der Erfindung ist darin zu sehen, dass das Speichermedium für NOₓ im Restgasstrang einer Salpetersäureanlage räumlich an einer Stelle angeordnet werden kann, an der das durch den Herstellungsprozess bedingte Temperaturniveau für die reversible Speicherung des NOₓ besonders günstig ist. Dies ist nicht zwangsläufig derselbe Ort bzw. dasselbe Temperaturniveau, bei dem auch das Gasreinigungssystem betrieben wird. Bevorzugt ist das Speichermedium für NOₓ an einer Stelle angeordnet, so dass seine Temperatur während des Anfahrens zu jedem Zeitpunkt unterhalb der jeweiligen Temperatur des SCR-Katalysators zum selben Zeitpunkt liegt. Bevorzugt beträgt die relative Temperaturdifferenz dabei mindestens 5°C, bevorzugter mindestens 10°C.

In einer besonders bevorzugten Ausführungsform dient der SCR-Katalysator, welcher in Schritt (c) des erfindungsgemäßen Verfahrens die Reduktion von NOₓ mit dem Reduktionsmittel für NOₓ katalysiert, seinerseits in Schritt (a) des erfindungsgemäßen Verfahrens als Speichermedium. Dies wird erfindungsgemäß bevorzugt dadurch erreicht, dass der SCR-Katalysator ein Material enthält oder aus diesem besteht, welches bevorzugt zur Adsorption von NOₓ geeignet ist. Geeignete SCR-Katalysatoren, insbesondere geeignete katalytische Materialien zur Reduktion von NOₓ mit einem Reduktionsmittel für NOₓ, insbesondere mit NH₃, sind einem Fachmann bekannt. Dabei handelt es sich vorzugsweise um mit Übergangsmetallen, einschließlich der Lanthaniden, dotierte Zeolithe, vorzugsweise mit Kobalt, insbesondere mit Kupfer und ganz besonders bevorzugt mit Eisen dotierte Zeolithe. Weitere mögliche Übergangsmetalle, die vorzugsweise zusammen mit Kobalt, Kupfer und/oder Eisen im Zeolithen auftreten, sind Mangan, Vanadium, Chrom oder Nickel. Bei den Zeolithen handelt es sich vorzugsweise um "high silica"-Zeolithe, die eine hohe hydrothermale Beständigkeit aufweisen. Vorzugsweise sind die Zeolithe ausgewählt aus der Gruppe der Typen MFI, BEA, FER, MOR und MEL oder Mischungen davon, bevorzugt vom Typ BEA oder MFI, besonders bevorzugt handelt es sich um einen ZSM-5-Zeolithen.

In dieser erfindungsgemäßen Ausführungsform kann auf die Freisetzung bzw. Überführung des NOₓ gemäß Schritt (b) des erfindungsgemäßen Verfahrens ggf. verzichtet werden, da das NOₓ bereits in unmittelbarer räumlicher Nähe oder direkt an dem katalytisch aktiven Material adsorbiert vorliegt, so dass die katalytische Reduktion durch Zufuhr des Reduktionsmittels für NOₓ in Schritt (c) eingeleitet werden kann, ohne dass es zuvor einer separaten Freisetzung und Überführung des gespeicherten NOₓ bedarf.

Als Speichermedium für NOₓ kommen als Alternative zu Festkörpern grundsätzlich auch Behälter in Betracht, in denen das NOₓ-enthaltende Restgas vorübergehend aufgenommen wird, ggf. unter Druck.

Bevorzugt verändert sich die Temperatur des gespeicherten NOₓ während seiner Speicherung. Bevorzugt verändert sich die Temperatur des gespeicherten NOₓ entsprechend mit der Veränderung der Temperatur des Restgases, welches beim Anfahren der Anlage anfällt.

Bevorzugt ist das Speichermedium für NOₓ in einer solchen Menge und mit einer solchen Speicherkapazität vorhanden, dass mindestens 20 %, bevorzugter mindestens 30 %, noch bevorzugter mindestens 50 %, am bevorzugtesten mindestens 60 %, und insbesondere mindestens 70 % der Gesamtmenge des während des Aufdrückens der Anlage insgesamt anfallenden NOₓ temporär gleichzeitig gespeichert werden können, vorzugsweise durch physikalische Adsorption oder durch chemische Adsorption bzw. Absorption. Die Gesamtmenge des während des Aufdrückens der Anlage insgesamt anfallenden NOₓ kann von einem Fachmann durch einfache Routineversuche oder auch einfache Berechnungen ermittelt werden.

Die Begriffe "Aufdrücken", "Füllen" und "Zünden" sind einem Fachmann im Zusammenhang mit Anlagen zur Herstellung von Salpetersäure bekannt und haben bevorzugt die im einleitenden Teil erläuterte Bedeutung.

Bevorzugt wird in Schritt (a) des erfindungsgemäßen Verfahrens ein Zustand durchlaufen, während dessen die Temperatur des Restgases kleiner als die Grenztemperatur T_{G} ist und zumindest ein Teil der molaren Gesamtmenge, bevorzugt mindestens 20 %, bevorzugter mindestens 30 %, noch bevorzugter mindestens 50 % und insbesondere mindestens 70 % der molaren Gesamtmenge des während des Aufdrückens in der Anlage insgesamt anfallenden NOₓ im Speichermedium gespeichert wird. Bevorzugt wird dieser Zustand durchlaufen kurz bevor die Temperatur des Restgases die Grenztemperatur T_{G} erreicht, beispielsweise 1 Minute vorher.

Im optionalen Schritt (b) des erfindungsgemäßen Verfahrens wird das in Schritt (a) gespeicherte NOₓ freigesetzt. Ferner umfasst Schritt (b) des erfindungsgemäßen Verfahrens ggf. die Überführung des freigesetzten NOₓ zu einem SCR-Katalysator, an dessen Oberfläche das NOₓ adsorbiert und dann in Schritt (c) unter Zufuhr von Reduktionsmittel für NOₓ katalytisch reduziert werden kann.

Die Freisetzung des gespeicherten NOₓ kann durch eine aktive Maßnahme erfolgen oder auch passiv.

In einer bevorzugten Ausführungsform erfolgt die Freisetzung des gespeicherten NOₓ passiv, insbesondere durch die weitergehende Erwärmung des Restgases auf die Grenztemperatur T_{G} und darüber hinaus. Diese Ausführungsform ist insbesondere dann bevorzugt, wenn die Speicherung des NOₓ im Speichermedium auf physikalischer Adsorption oder chemischer Adsorption bzw. Absorption beruht. In diesem Fall erfolgt die Freisetzung des NOₓ bevorzugt durch Desorption, welche mit steigender Temperatur des an das Speichermedium adsorbierten bzw. absorbierten NOₓ begünstigt wird. Bevorzugt wird bei dem erfindungsgemäßen Verfahren das Speichermedium mit dem daran adsorbierten bzw. absorbierten NOₓ kontinuierlich dem NOₓ-enthaltenen Restgas ausgesetzt, so dass es mit Erwärmung des NOₓ-enthaltenen Restgases durch dieses erwärmt wird.

Vorzugsweise erfolgt die Freisetzung des im Speichermedium gespeicherten NOₓ, wenn die Temperatur des Restgases die Grenztemperatur T_{G} erreicht hat. Im Falle einer physikalischen Adsorption erkennt ein Fachmann, dass aufgrund der Adsorptionsisotherme die Freisetzung in der Praxis nicht schlagartig erfolgt, sondern dass infolge der vorzugsweise stetigen Erwärmung des NOₓ-enthaltenden Restgases und damit auch infolge der stetigen Erwärmung des im Speichermedium gespeicherten NOₓ ab einer bestimmten Temperatur signifikante Desorptionsprozesse eingeleitet werden, welche zu einer Freisetzung des NOₓ führen.

In einer anderen bevorzugten Ausführungsform erfolgt die Freisetzung des gespeicherten NOₓ aktiv, insbesondere wenn als Speichermedium Behälter eingesetzt werden, in denen das NOₓ-enthaltende Restgas vorübergehend aufgenommen wird, ggf. unter Druck. In diesem Fall kann die Freisetzung beispielsweise durch aktives Öffnen geeigneter Ventile erfolgen und das NOₓ aus dem Speichermedium freigesetzt werden.

Auch eine aktive zusätzliche temporäre Beheizung des Speichermediums bzw. des in das Speichermedium eintretenden Restgasstromes, welche üblicherweise nicht im Prozessschema einer Salpetersäureanlage vorgesehen ist, ist im Sinne der Erfindung einsetzbar. Dabei wird diese Beheizung vorzugsweise zusätzlich zur Unterstützung der üblichen Aufheizung des Restgases betrieben, um ein schnelleres Erreichen von T_{G} zu gewährleisten. Die Beheizung kann dabei beispielweise durch entsprechende Wärmetauscher, Brenner oder auch elektrische Heizregister bewirkt werden.

Sofern das NOₓ bereits in unmittelbarer räumlicher Nähe oder direkt an dem katalytisch aktiven Material gespeichert vorliegt, insbesondere daran adsorbiert ist, kann auf die Freisetzung des NOₓ gemäß Schritt (b) des erfindungsgemäßen Verfahrens ggf. verzichtet werden, da die katalytische Reduktion durch Zufuhr des Reduktionsmittels für NOₓ in Schritt (c) des erfindungsgemäßen Verfahrens eingeleitet werden kann, ohne dass es zuvor einer separaten Freisetzung und Überführung des gespeicherten NOₓ bedarf.

In Schritt (c) des erfindungsgemäßen Verfahrens wird das NOₓ mit einem Reduktionsmittel für NOₓ in Gegenwart eines SCR-Katalysators zusammengebracht, nachdem die Temperatur des Restgases die Grenztemperatur T_{G} überschritten hat, aber nicht vorher, wodurch zumindest ein Teil des NOₓ katalytisch reduziert wird, vorzugsweise zu N₂ und H₂O. Dazu wird dem SCR-Katalysator ein Reduktionsmittel für NOₓ zugeführt, nachdem, bevorzugt sobald die Temperatur des Restgases die Grenztemperatur T_{G} überschritten hat, aber nicht vorher, wodurch zumindest ein Teil des NOₓ katalytisch reduziert wird, vorzugsweise zu N₂ und H₂O.

Geeignete Reduktionsmittel für NOₓ sind einem Fachmann bekannt. Dabei kann es sich um jegliches Stickstoff enthaltende Reduktionsmittel handeln, das eine hohe Aktivität zur Reduktion von NOₓ aufweist. Beispiele sind Azane, Hydroxylderivate von Azanen sowie Amine, Oxime, Carbamate, Harnstoff oder Harnstoffderivate. Beispiele für Azane sind Hydrazin und ganz besonders Ammoniak. Ein Beispiel für ein Hydroxylderivat von Azanen ist Hydroxylamin. Beispiele für Amine sind primäre aliphatische Amine, wie Methylamin. Ein Beispiel für Carbamate ist Ammoniumcarbamat. Beispiele für Harnstoffderivate sind N,N'-substituierte Harnstoffe, wie N,N'-Dimethylharnstoff. Harnstoffe und Harnstoffderivate werden vorzugsweise in Form von wässrigen Lösungen eingesetzt. Besonders bevorzugt wird Ammoniak als Reduktionsmittel für NOₓ eingesetzt.

Geeignete SCR-Katalysatoren, insbesondere geeignete katalytische Materialien zur Reduktion von NOₓ mit einem Reduktionsmittel für NOₓ, insbesondere mit NH₃, sind einem Fachmann bekannt. Dabei handelt es sich vorzugsweise um mit Übergangsmetallen, einschließlich der Lanthaniden, dotierte Zeolithe, vorzugsweise mit Kobalt, insbesondere mit Kupfer und ganz besonders bevorzugt mit Eisen dotierte Zeolithe. Weitere mögliche Übergangsmetalle, die vorzugsweise zusammen mit Kobalt, Kupfer und/oder Eisen im Zeolithen auftreten, sind Mangan, Vanadium, Chrom oder Nickel.

Bei den Zeolithen handelt es sich vorzugsweise um "high silica"-Zeolithe, die eine hohe hydrothermale Beständigkeit aufweisen. Vorzugsweise sind die Zeolithe ausgewählt aus der Gruppe der Typen MFI, BEA, FER, MOR und MEL oder Mischungen davon, bevorzugt vom Typ BEA oder MFI, besonders bevorzugt handelt es sich um einen ZSM-5-Zeolithen. Genaue Angaben zum Aufbau oder Struktur der erfindungsgemäß eingesetzten Zeolithtypen werden im Atlas of Zeolite Structure Types, Elsevier, 4th revised Edition 1996, gegeben.

Darüber hinaus werden bevorzugt sogenannte *"gesteamte"* Zeolithe eingesetzt, also Zeolithe, bei denen nach einer hydrothermalen Behandlung sich ein Teil der Aluminiumgitteratome auf Zwischengitterplätze verschoben hat. Dem Fachmann sind derartige Zeolithe und deren Herstellungsweise bekannt.

Der Gehalt an Übergangsmetallen in den Zeolithen kann, bezogen auf die Masse an Zeolith, in weiten Bereichen schwanken, beispielsweise bis zu 25% betragen, vorzugsweise jedoch 0,1 bis 10%, und insbesondere 2 bis 7% betragen.

Die Dotierung der Zeolithe mit den Übergangsmetallen kann beispielweise ausgehend von der H- oder bevorzugt NH₄-Form der Zeolithe durch lonenaustausch (in wässriger Phase oder durch Festkörperreaktion) mit entsprechenden Salzen der Übergangsmetalle erfolgen. Die erhaltenen SCR-Katalysatorpulver werden üblicherweise in einem Kammerofen an der Luft bei Temperaturen im Bereich von 400 bis 650°C kalziniert. Nach dem Kalzinieren werden die Übergangsmetall-haltigen Zeolithe in destilliertem Wasser intensiv gewaschen und nach Abfiltrieren des Zeolithen getrocknet. Diese und andere einschlägige Methoden zur Beladung bzw. Dotierung von Zeolithen mit Übergangsmetallen sind dem Fachmann bekannt. Abschließend können die so erhaltenen Übergangsmetallhaltigen Zeolithe mit geeigneten Hilfsstoffen zur Plastifizierung und Bindemitteln, wie beispielsweise Alumosilikaten oder Böhmit, versetzt und gemischt und beispielsweise zu zylindrischen SCR-Katalysatorkörpern extrudiert werden.

Der SCR-Katalysator kann als Formkörper beliebiger Größe und Geometrie vorliegen, bevorzugt in Geometrien, die ein großes Verhältnis von Oberfläche zu Volumen aufweisen und bei deren Durchströmung ein möglichst geringer Druckverlust erzeugt wird. Typisch sind alle in der Katalyse bekannten Geometrien, wie z.B. Zylinder, Hohlzylinder, Mehrlochzylinder, Ringe, Granulatbruch, Trilobes oder Wabenstrukturen. Die Größe der eingesetzten SCR-Katalysatorpartikel bzw. -formkörper kann in weiten Bereichen schwanken. Typischerweise weisen diese einen Äquivalenzdurchmesser im Bereich von 1 bis 10 mm auf. Bevorzugt sind Äquivalenzdurchmesser von 2 bis 5 mm auf. Der Äquivalenzdurchmesser ist dabei der Durchmesser einer volumengleichen Kugel.

Erfindungsgemäß erfolgt das Zusammenbringen von NOₓ und Reduktionsmittel für NOₓ in Gegenwart des SCR-Katalysators erst dann, wenn die Temperatur des NOₓ-enthaltenden Restgases die Grenztemperatur T_{G} erreicht hat, aber nicht vorher. Würde das Zusammenbringen bereits vorher geschehen, so könnte die unerwünschte Bildung und Akkumulation von NH₄NO₃ nicht wirksam unterbunden werden, da die Temperatur des Restgases noch nicht hoch genug ist. Erfindungsgemäß kann Schritt (c) des erfindungsgemäßen Verfahrens sofort begonnen werden, sobald die Temperatur des Restgases die Grenztemperatur überschritten hat. Es ist jedoch auch möglich, dass Schritt (c) des erfindungsgemäßen Verfahrens erst eine Weile danach begonnen wird, nachdem die Temperatur des Restgases die Grenztemperatur überschritten hat, beispielsweise erst, sobald die Temperatur des Restgases 5 °C oder 10 °C oberhalb der Grenztemperatur T_{G} liegt.

Erfindungsgemäß wird Schritt (c) des erfindungsgemäßen Verfahrens jedoch bevorzugt begonnen, bevor die Temperatur des Restgases die Betriebstemperatur T_{B} erreicht hat. Bevorzugt wird mit der Durchführung von Schritt (c) des erfindungsgemäßen Verfahrens bereits begonnen, bevor der NH₃-Brenner der Anlage zur Herstellung von Salpetersäure gestartet (gezündet) wird.

Erfindungsgemäß ist die Grenztemperatur T_{G} bevorzugt daher diejenige Temperatur des NOₓ-enthaltenden Restgases, bei der unter den gegebenen Bedingungen der jeweiligen Anlage zur Herstellung von Salpetersäure gerade kein NH₄NO₃ gebildet und akkumuliert wird, wenn das NOₓ mit dem Reduktionsmittel für NOₓ in Gegenwart des SCR-Katalysators zusammengebracht wird. Diese Grenztemperatur T_{G} ist dem Fachmann aus der Literatur bekannt (z.B. Iwaki et al, Appl. Catal. A, 390 (2010) 71-77 oder Koebel et al, Ind. Eng. Chem. Res. 40 (2001) 52-59) oder kann durch entsprechende einfache Routineversuche ermittelt werden. Bevorzugt liegt die Grenztemperatur T_{G} im Bereich von 170°C bis 200°C und beträgt daher bevorzugt 170°C, 171°C, 172°C, 173°C, 174°C, 175°C, 176°C, 177°C, 178°C, 179°C, 180°C, 181°C, 182°C, 183°C, 184°C, 185°C, 186°C, 187°C, 188°C, 189°C, 190°C, 191°C, 192°C, 193°C, 194°C, 195°C, 196°C, 197°C, 198°C, 199°C oder 200°C. Je nach eingesetztem SCR-Katalysator kann die Grenztemperatur T_{G} jedoch auch darunter oder darüber liegen.

Schritt (c) des erfindungsgemäßen Verfahrens wird bevorzugt zusätzlich auch bei deutlich höheren Temperaturen oberhalb der Grenztemperatur T_{G}, vorzugsweise im gesamten Temperaturbereich von der Grenztemperatur T_{G} bis hin zur Betriebstemperatur T_{B} des Restgases durchgeführt, jedoch nicht bei Temperaturen des Restgases unterhalb der Grenztemperatur T_{G}. Da die Betriebstemperatur T_{B} üblicherweise bei Temperaturen des Restgases von mindestens 300°C, bevorzugter mindestens 350°C und besonders bevorzugt mindestens 400°C liegt, erfolgt Schritt (c) des erfindungsgemäßen Verfahrens bevorzugt auch bei Temperaturen des Restgases, welche die Grenztemperatur T_{G} deutlich übersteigen.

Das Zuführen eines Reduktionsmittels für NOₓ zum SCR-Katalysator gemäß Schritt (c) kann durch übliche Maßnahmen erfolgen, welche einem Fachmann bekannt sind. In einer bevorzugten Ausführungsform liegt das NOₓ bereits zuvor in Gegenwart des SCR-Katalysators vor und ist besonders bevorzugt bereits daran adsorbiert. Diese Ausführungsform ist insbesondere dann bevorzugt, wenn der SCR-Katalysator in Schritt (c) des erfindungsgemäßen Verfahrens zuvor in Schritt (a) des erfindungsgemäßen Verfahrens bereits als Speichermedium für NOₓ gewirkt hat. Es wurde überraschend gefunden, dass das gespeicherte (adsorbierte) NO bzw. NO₂ durch die Zuführung einer bestimmten Menge an Reduktionsmittel rasch wieder vom SCR-Katalysator entfernt wird. Dies gilt auch dann, wenn diesem SCR-Speicherkatalysator parallel weiteres NOₓ zugeführt wird.

Bevorzugt wird die Dosierung des Reduktionsmittels für NOₓ, bevorzugt des Ammoniaks, so geregelt oder so eingestellt bzw. gesteuert, dass eine möglichst vollständige Reduktion des sorbierten und dem Speichermedium bzw. dem SCR-Katalysator ggf. noch zuströmenden NOₓ bewirkt wird, ohne dass ein unerwünschter Durchbruch (Schlupf) an Ammoniak auftritt.

Die dafür benötigten Mengen an Reduktionsmittel sind von der Art des Reduktionsmittels sowie der Menge und Art des SCR-Katalysators und sonstigen Betriebsparameter wie Druck und Temperatur abhängig. Insbesondere, wenn das eingesetzte Speichermedium und/oder der eingesetzte SCR-Katalysator in der Lage ist, nicht nur NOₓ, sondern zusätzlich auch NH₃ zu speichern, was bei den erfindungsgemäß besonders bevorzugten Übergangsmetallbeladenen Zeolith- Katalysatoren der Fall ist, sollte erfindungsgemäß gewährleistet werden, dass in Schritt (c) nicht mehr Reduktionsmittel (NH₃) dosiert wird, als für die Reduktion des NOₓ benötigt wird. Andernfalls besteht die Gefahr eines unbeabsichtigten Schlupfs von NH₃ während der Aufheizphase.

Im Falle von Ammoniak als Reduktionsmittel für NOₓ wird üblicherweise eine solche Menge an NH₃ zugegeben, dass bezogen auf die Komponenten NH₃ und NOₓ, welche am Speichermedium sorbiert sind bzw. diesem noch zuströmen, ein molares NH₃/NOₓ-Verhältnis von 0,8 bis 2,5, vorzugsweise von 0,9 bis 2,0, besonders bevorzugt von 1,0 bis 1,8 resultiert.

Entgegen der üblicherweise bei Gasreinigungssystemen angewendeten Regelung der aufgegebenen NH₃ Menge im Hinblick auf die gewünschte NOₓ-Austrittskonzentration wird im einfachsten Fall erfindungsgemäß bevorzugt eine Verhältnissteuerung im Hinblick auf die NOₓ-Eintrittskonzentration angewendet. Bei dieser Steuerung wird die NOₓ-Konzentration vor dem Gasreinigungssystem (d.h. am Eintritt) bestimmt und NH₃ gemäß den zuvor genannten molaren NH₃:NOₓ-Verhältnis dosiert. So kann sichergestellt werden, dass fortlaufend ein Reaktionspartner für das aufgegebene NH₃ zur Verfügung steht und dass eine ungewollte Akkumulation von NH₃ an dem SCR-Katalysator wirksam verhindert wird.

Demnach umfasst Schritt (c) des erfindungsgemäßen Verfahrens bevorzugt die Messung der Konzentration von NOₓ im Restgas, bevor das Restgas mit dem SCR-Katalysator in Kontakt gebracht wird, wobei in Abhängigkeit der gemessenen Konzentration von NOₓ die Menge des zugeführten Reduktionsmittels für NOₓ so dosiert (gesteuert) wird, dass eine Akkumulation des Reduktionsmittels auf dem SCR-Katalysator verhindert wird. Bevorzugt wird demnach nicht mehr Reduktionsmittel für NOₓ zugeführt, als durch die katalytische Reduktion von NOₓ verbraucht wird.

Bevorzugt wird das Reduktionsmittel für NOₓ, bevorzugt NH₃, direkt stromaufwärts des SCR-Katalysators dem Restgasstrang zugeführt und auf die Oberfläche des SCR-Katalysators geleitet, an dem das NOₓ adsorbiert ist, so dass das NOₓ dort katalytisch reduziert werden kann, bevorzugt zu N₂ unter gleichzeitiger Bildung von H₂O.

Bevorzugt erfolgt die Reduktion zumindest zum Teil nach dem *"fast'* SCR-Prozess, d.h. gemäß dem Reaktionsschema:

2 NH₃ + NO + NO₂ → 2 N₂ + 3 H₂O

oder dem "normal" SCR-Prozess, d.h. gemäß dem Reaktionsschema:

4 NH₃ + 4 NO + O₂ → 4 N₂ + 6 H₂O.

Der Oxidationsgrad des in den SCR-Katalysator eintretenden NOₓ beträgt bevorzugt 30% bis 70%, bevorzugter 40% bis 60%, besonders bevorzugt ca. 50%.

Wenn der Oxidationsgrad des NOₓ zu hoch ist, d.h. wenn der Anteil von NO₂ im Gemisch mit NO zu groß ist, wird in einer bevorzugten Ausführungsform des erfindungsgemäßen Verfahrens der Oxidationsgrad des NOₓ verringert und auf diese Weise auf einen gewünschten geringeren Wert eingestellt. Vorzugsweise wird der Oxidationsgrad so eingestellt, dass er 80%, bevorzugter 75%, noch bevorzugter 70% und insbesondere 65% nicht übersteigt. Geeignete Maßnahmen zur Verringerung des Gehalts an NO₂ sind einem Fachmann bekannt. Das das Gleichgewicht zwischen NO₂ und NO temperaturabhängig ist, kann beispielsweise durch Veränderung der Temperatur in Gegenwart geeigneter Katalysatoren (z.B. Platin) das thermodynamische Gleichgewicht in die gewünschte Richtung verschoben werden.

Da NO₂ im Allgemeinen besser gespeichert werden kann als NO, ist ein vergleichsweise hoher Oxidationsgrad für die Speicherung in Schritt (a) des erfindungsgemäßen Verfahrens von Vorteil. In Schritt (c) des erfindungsgemäßen Verfahrens kann sich ein hoher Oxidationsgrad hingegen negativ auswirken, weshalb es erfindungsgemäß bevorzugt ist, den Oxidationsgrad im Verlauf des Verfahrens von hohen Werten (z.B. > 70 %) für Schritt (a) auf mittlere Werte (z.B. ≤ 70 %) für Schritt (c) zu verringern.

In einer bevorzugten Ausführungsform des erfindungsgemäßen Verfahrens verhalten sich T₀, T_{G} und T_{B} zueinander wie folgt: T₀ < 170°C und/oder 170°C ≤ T_{G} < 300°C und/oder 300°C ≤ T_{B}.

Bevorzugte Ausführungsformen A¹ bis A⁸ für Bereiche der Starttemperatur T₀, der Grenztemperatur T_{G} sowie der Betriebstemperatur T_{B} mit T₀ < T_{G} < T_{B} sind in nachfolgender Tabelle zusammengefasst:

| [°C] | A¹ | A² | A³ | A⁴ | A⁵ | A⁶ | A⁷ | A⁸ |
|---|---|---|---|---|---|---|---|---|
| T₀ | < 170 | ≤ 150 | ≤ 120 | ≤ 120 | ≤ 100 | ≤ 100 | ≤ 100 | ≤ 100 |
| T_{G} | 170-220 | 170-220 | 170-210 | 170-210 | 170-200 | 180-200 | 180-200 | 180-190 |
| T_{B} | ≥ 300 | ≥ 310 | ≥ 320 | ≥ 330 | ≥ 340 | ≥ 350 | ≥ 375 | ≥ 400 |

Bevorzugt erfolgen Schritte (a) und (c) des erfindungsgemäßen Verfahrens zeitlich nacheinander, wobei es allerdings möglich ist, dass der optionale Schritt (b) teilweise oder vollständig gleichzeitig mit Schritt (c) erfolgt.

Bevorzugt wird das erfindungsgemäße Verfahren so betrieben und die Menge des erforderlichen Reduktionsmittels wird so dosiert, dass mindestens 50 %, bevorzugter mindestens 60 %, noch bevorzugter mindestens 70 %, am bevorzugtesten mindestens 80 %, und insbesondere mindestens 90 %, des insgesamt während des Anfahrens der Anlage zur Herstellung von Salpetersäure, d.h. während des Aufdrückens und Füllens anfallenden Menge an NOₓ reduziert werden.

In einer bevorzugten Ausführungsform umfasst die Salpetersäureanlage, während deren Anfahren das NOₓ anfällt, ein Gasreinigungssystem zur Verminderung der Konzentrationen von NOₓ und N₂O im Restgas, welches im Anschluss an das Anfahren der Anlage während des stationären Betriebs der Salpetersäureanlage gebildet wird. Das Gasreinigungssystem verfolgt demnach insbesondere (auch) den Zweck, im stationären Betrieb der Anlage die Konzentration von Stickoxiden (NO, NO₂ und N₂O) im Restgas zu verringern.

In einer besonders bevorzugten Ausführungsform erfolgen Schritte (a), ggf. (b) und (c) des erfindungsgemäßen Verfahrens innerhalb dieses Gasreinigungssystems. Dazu ist bevorzugt der SCR-Katalysator, in dessen Gegenwart in Schritt (c) des erfindungsgemäßen Verfahrens die Reduktion des NOₓ erfolgt, in dem Gasreinigungssystem angeordnet. In diesem Fall verfolgt das Gasreinigungssystem demnach zwei Zwecke, nämlich sowohl beim Anfahren als auch beim stationären Betrieb der Anlage die Konzentration der jeweils anfallenden Stickoxide im Restgas zu verringern.

Ein weiterer Aspekt der Erfindung betrifft ein Verfahren zur Verminderung der Stickoxidkonzentrationen (bevorzugt NOₓ und N₂O) im Restgas, welche sowohl während des Anfahrens einer Anlage zur Herstellung von Salpetersäure als auch im Anschluss daran während des stationären Betriebs der Anlage anfallen. Dieses erfindungsgemäße Verfahren umfasst das vorstehend beschriebene Verfahren zur Verminderung der Konzentration von Stickoxiden im Restgas, welche während des Anfahrens einer Anlage zur Herstellung von Salpetersäure anfallen.

Alle bevorzugten Ausführungsformen, welche vorstehend im Zusammenhang mit dem erfindungsgemäßen Verfahren zur Verminderung der Konzentration von Stickoxid in Restgas, welches während des Anfahrens einer Anlage zur Herstellung von Salpetersäure anfällt, beschrieben wurden, gelten analog auch für das erfindungsgemäße Verfahren zur Verminderung der Konzentration von Stickoxiden (bevorzugt NOₓ und N₂O) in Restgas, welches sowohl während des Anfahrens einer Anlage zur Herstellung von Salpetersäure als auch im Anschluss daran während des stationären Betriebs der Anlage anfällt, und werden daher nicht wiederholt.

In einer bevorzugten Ausführungsform wird während des stationären Betriebs der Anlage
(i) N₂O katalytisch in O₂ und N₂ zersetzt und NOₓ katalytisch in Gegenwart eines Reduktionsmittels für NOₓ reduziert; oder
(ii) N₂O katalytisch in Gegenwart eines Reduktionsmittels für N₂O reduziert und NOₓ katalytisch in Gegenwart eines Reduktionsmittels für NOₓ reduziert; oder
(iii) N₂O katalytisch in O₂ und N₂ zersetzt und anschließend restliches N₂O katalytisch in Gegenwart eines Reduktionsmittels für N₂O weiter reduziert und NOₓ katalytisch in Gegenwart eines Reduktionsmittels für NOₓ reduziert.

Bevorzugt handelt es sich bei den beiden vorstehend beschriebenen Ausführungsformen (i), (ii) und (iii) um Varianten der sog. EnviNOx^{®}-Technologie, welche im Folgenden und im Sinne der Erfindung auch als (i) EnviNOx^{®}-Technologie "Variante 1", und (ii) EnviNOx^{®}-Technologie "Variante 2" und (iii) EnviNOx^{®}-Technologie "Variante 1/2" bezeichnet werden und deren Verfahrensweise bzw. deren Anlagenkonzeption in EP 1 259 307, EP 1 370 342 B1, EP 1 515 791 B1, EP 2 286 897 B1 (alle Variante 1), EP 1 497 014 (Variante 2) sowie in DE 10 2005 022 650 A1 (Variante 1/2) beschrieben ist.

Besonders bevorzugt weist dazu die Anlage ein Gasreinigungssystem zur Verminderung der Konzentration von NOₓ und N₂O in Restgas auf, welches während des stationären Betriebs der Anlage zur Herstellung von Salpetersäure anfällt, wobei
(i) das Gasreinigungssystem einen zweistufigen Aufbau aufweist, wobei während des stationären Betriebs der Anlage in Strömungsrichtung des Restgases in der ersten Stufe N₂O katalytisch in O₂ und N₂ zersetzt wird, nach der ersten Stufe ein Reduktionsmittel für NOₓ mit dem Restgas vermischt wird und sodann in einer zweiten Stufe NOₓ katalytisch in Gegenwart des Reduktionsmittels reduziert wird; oder
(ii) während des stationären Betriebs der Anlage das Restgas im Gasreinigungssystem mit einem Reduktionsmittel für NOₓ sowie einem Kohlenwasserstoff, Kohlenmonoxid, Wasserstoff oder einem Gemisch dieser Gase als Reduktionsmittel für N₂O vermischt wird, wobei das Reduktionsmittel in einer solchen Menge zugegeben wird, die mindestens zur vollständigen Reduktion des NOₓ ausreicht, und dass das Gasgemisch über mindestens eine Reaktionszone geleitet wird, die einen SCR-Katalysator für die Reduktion von NOₓ und für die Reduktion von N₂O umfasst; oder
(iii) das Gasreinigungssystem einen zweistufigen Aufbau aufweist, wobei während des stationären Betriebs der Anlage in Strömungsrichtung des Abgases in der ersten Stufe N₂O katalytisch in O₂ und N₂ zersetzt wird, und das Abgas nach der ersten Stufe mit einem Reduktionsmittel für NOₓ sowie einem Kohlenwasserstoff, Kohlenmonoxid, Wasserstoff oder einem Gemisch dieser Gase als Reduktionsmittel für N₂O vermischt wird, wobei das Reduktionsmittel in einer solchen Menge zugegeben wird, die mindestens zur vollständigen Reduktion des NOₓ ausreicht, und dass das Gasgemisch über mindestens eine Reaktionszone geleitet wird, die einen Katalysator für die Reduktion von NOₓ und für die Reduktion von N₂O umfasst.

Im Gasreinigungssystem lassen sich verschiedene bereits bekannte Reinigungsverfahren einsetzen, die in Strömungsrichtung des aus der Anlage zur Herstellung von Salpetersäure ausgeschleusten Restgases nach dem Absorptionsturm angeordnet sind. Dabei kann es sich um klassische SCR-Verfahren handeln, bei denen Reste von NOₓ katalytisch und unter Einsatz von Reduktionsmitteln für NOₓ, vorzugsweise von NH₃, aus dem Restgas der Anlage zur Herstellung von Salpetersäure entfernt werden. Typische SCR-Katalysatoren enthalten Übergangsmetalloxide, insbesondere V₂O₅ geträgert auf TiO₂, Edelmetalle, insbesondere Platin, oder mit Übergangsmetallen beladene Zeolithe, insbesondere mit Eisen beladene Zeolithe. Solche für den stationären Betrieb der Anlage zur Herstellung von Salpetersäuren geeignete Verfahren sind an sich bekannt (vgl. z.B. WO 01/51181 A1, WO 03/105998 A1, und WO 03/084646 A1 beschrieben). Eine allgemeine Übersicht über SCR-Katalysatoren zur NOₓ-Reduktion findet sich bspw. beschrieben in G. Ertl, H. Knözinger J. Weitkamp: Handbook of Heterogeneous Catalysis, Vol. 4, Seiten 1633-1668, VCH Weinheim (1997)).

Bevorzugt basiert das Gasreinigungssystem auf der EnviNOx^{®}-Technologie, Variante 1, Variante 2, oder Variante 1/2. Dabei handelt es sich um ein Verfahren, bei dem NOₓ und N₂O katalytisch aus dem Restgas entfernt werden und wobei zumindest das NOₓ durch Zuführung von NH₃ reduziert wird. Im EnviNOx^{®}-Verfahren werden bevorzugt Eisen-Zeolith-Katalysatoren eingesetzt; diese eignen sich besonders gut für die insbesondere vollständige katalytische Reduktion von NOₓ, weisen im Unterschied zu klassischen SCR-Katalysatoren auf V₂O₅/TiO₂-Basis überraschend gleichzeitig die erforderliche Eigenschaft als Speichermedium auf und bieten den zusätzlichen Vorteil, dass sie im Vergleich zu vorgenannten klassischen SCR-Katalysatoren auch bei höheren Temperaturen eingesetzt werden können, was die Möglichkeit zur gleichzeitigen N₂O-Minderung eröffnet.

Es wurde überraschend gefunden, dass es im Vergleich zu herkömmlichen Anlagen zu einer Änderung im NOₓ-Emissionsverhalten kommt, wenn die Anlage zur Herstellung von Salpetersäure mit einem Gasreinigungssystem auf Basis der EnviNOx^{®}-Technologie ausgestattet ist (Variante 1, Variante 2 oder Variante 1/2). Dabei reduziert sich die NOₓ-Emission (erster NOₓ-Peakwährend des Aufdrückens der Salpetersäureanlage) auf maximale Konzentration von unter 100 ppm und erscheint leicht zeitverzögert. Der zweite Peak (Füllen des Absorptionsturms) ist ebenfalls zeitverzögert, aber bezüglich der Intensität annähernd gleich. Dagegen erscheint der dritte Peak (Erzeugung von HNO₃) anfangs deutlich verstärkt. Es wurde überraschend gefunden, dass die im EnviNOx^{®}-Verfahren bevorzugt eingesetzten Eisen-Zeolith- Katalysatoren in der Lage sind, NO₂ vornehmlich bei Temperaturen von unter 250°C physikalisch zu absorbieren (speichern). Ist die NO₂-Absorptionskapazität des SCR-Katalysators nach einiger Zeit erreicht, wird durch das Gasreinigungssystem lediglich eine leichte Verzögerung im NOₓ-Emissionsverhalten bewirkt.

Durch die bevorzugte Kombination der Eigenschaften, sowohl zunächst als Speichermedium (Absorptionsmedium) für NOₓ als auch anschließend als SCR-Katalysator für die Reduktion von NOₓ zu wirken, ermöglichen die erfindungsgemäß besonders bevorzugten Zeolith-Katalysatoren eine deutliche Reduzierung der NOₓ-Emissionen während des Anfahrens der Anlage zur Herstellung von Salpetersäure. Oftmals wird die Mindesttemperatur (~200°C) für die Durchführung der Reduktion von NOₓ bereits nach der Phase 1 und vor Phase 2 erreicht (vgl. Figur 1). Somit besteht die Möglichkeit, nach dem Überschreiten dieser Temperatur (T_{G}), Reduktionsmittel, insbesondere NH₃, dem Reaktionsraum dosiert zuzuführen und auf diese Weise die in der Phase 2 und Phase 3 des Anfahrens anfallenden Stickoxide zu reduzieren. In Summe bietet der Einsatz eines solchen Gasreinigungssystems somit deutliche Vorteile gegenüber Systemen, welche auf klassischen SCR-Katalysatoren basieren, die keine Speichereigenschaften haben. Durch die Fähigkeit der eingesetzten SCR-Katalysatoren (z.B. Eisen-Zeolith-Katalysatoren), NOₓ zunächst zu speichern (adsorbieren), wird die Emission direkt nach dem Start der Anlage gemindert.

Dadurch ergibt sich prinzipiell auch der Vorteil, dass das Gasreinigungssystem an Stellen in die Anlage zur Herstellung von Salpetersäure integriert werden kann, an welchen im stationären Betrieb Temperaturen (T_{B}) von 400 bis 500°C vorliegen. Somit kann bereits im Luftbetrieb der Anlage zur Herstellung von Salpetersäure eine Temperatur von über 200°C, beispielsweise von 210-230°C, am Eingang des Gasreinigungssystems erreicht werden, was bereits im Luftbetrieb eine Zuführung von Reduktionsmittel in Schritt (c) ermöglicht.

Weil das Gasreinigungssystem auf Basis der EnviNOx^{®}-Technologie (Variante 1, Variante 2 oder Variante 1/2) nicht nur zur Reduktion von NOₓ ausgelegt ist, sondern zusätzlich auch die Minderung von N₂O bewirkt, ist die zur Verfügung stehende SCR-Katalysatormenge im Vergleich zu herkömmlichen Systemen erhöht, was sich günstig auf die Speicherkapazität des SCR-Katalysators für NOₓ auswirkt. Ein Vorteil dieser Verfahrensweise besteht darin, dass zusätzliche NO₂-Moleküle und NH₃-Moleküle, welche nicht durch die SCR-Reaktion an dem SCR-Katalysator abreagiert sind, in unerwartet großer Menge an den SCR-Katalysator adsorbiert werden und somit nicht in die Umwelt emittiert werden. Weil die NOₓ-Konzentration während des Aufdrückenvorgangs nur als Peak auftritt und somit mengenmäßig begrenzt ist, reicht die Speicherkapazität herkömmlicher Gasreinigungssysteme auf Basis der EnviNOx^{®}-Technologie (Variante 1, Variante 2 oder Variante 1/2) häufig bereits aus, um eine Emission wirksam zu verhindern. Ein weiterer Vorteil kann erreicht werden, wenn das adsorbierte NO₂ durch die Zugabe einer vorbestimmten Menge an Reduktionsmittel, die bevorzugt im Vorfeld bestimmt wurde, wieder vom SCR-Katalysator entfernt wird.

Ein weiterer Aspekt der Erfindung betrifft eine Vorrichtung zur Verminderung der Konzentration von Stickoxiden in Restgas, welches während des Anfahrens einer Anlage zur Herstellung von Salpetersäure anfällt, wobei die Vorrichtung eingerichtet ist zur Erwärmung des Restgases von einer Starttemperatur T₀ bis auf eine Betriebstemperatur T_{B} durch Rückgewinnung der bei der Ammoniakoxidation anfallenden Reaktionsenergie im Prozess zur Herstellung von Salpetersäure, umfassend die Elemente:
A) ein Speichermedium für NOₓ mit einer Kapazität, welche ausreicht, so dass mindestens 5,0 Vol.-% des NOₓ, welches insgesamt während des Anfahrens in der Anlage zur Herstellung von Salpetersäure anfällt, in dem Speichermedium gespeichert werden können;
B) ggf. Mittel zum Freisetzen des gespeicherten NOₓ;
C) einen SCR-Katalysator zur Reduktion von NOₓ;
D) eine Steuerungsvorrichtung umfassend eine Temperaturmessvorrichtung zur Bestimmung der Temperatur des Restgases und eine Dosiervorrichtung zur Dosierung eines Reduktionsmittels für NOₓ in Abhängigkeit von der gemessenen Temperatur des Restgases;
E) Mittel zum Zusammenbringen des Reduktionsmittels für Oₓ mit dem NOₓ in Gegenwart des SCR-Katalysators zum katalytischen Reduzieren zumindest eines Teils des NOₓ; und
F) ein Wärmetauscher konfiguriert zum Einbringen der bei der Ammoniakoxidation freigesetzten Reaktionswärme in das Restgas nach Verlassen des Absorptionsturms der Anlage zur Herstellung von Salpetersäure.

Bevorzugt dient die erfindungsgemäße Vorrichtung zur Verminderung der Konzentration von Stickoxiden (bevorzugt NOₓ und N₂O) in Restgas, welche sowohl während des Anfahrens einer Anlage zur Herstellung von Salpetersäure als auch im Anschluss daran während des stationären Betriebs der Anlage anfallen.

Alle bevorzugten Ausführungsformen, welche vorstehend im Zusammenhang mit den beiden erfindungsgemäßen Verfahren beschrieben wurden, gelten analog auch für die erfindungsgemäße Vorrichtung, und werden daher nicht wiederholt.

In einer bevorzugten Ausführungsform umfasst die erfindungsgemäße Vorrichtung als zusätzliche Elemente G) Mittel zum Einstellen des Oxidationsgrads des NOₓ, welche vorzugsweise dazu geeignet sind, den Oxidationsgrad des NOₓ so einzustellen, dass er 80%, bevorzugter 75%, noch bevorzugter 70% und insbesondere 65% nicht übersteigt.

In einer bevorzugten Ausführungsform der erfindungsgemäßen Vorrichtung wirkt der SCR-Katalysator zur Reduktion von NOₓ C) auch als Speichermedium A). Geeignete SCR-Katalysatoren, insbesondere geeignete katalytische Materialien zur Reduktion von NOₓ mit einem Reduktionsmittel für NOₓ, insbesondere NH₃, sind einem Fachmann bekannt. Bevorzugt ist das katalytisch aktive Material ausgewählt aus der Gruppe bestehend aus Eisen, Verbindungen des Eisens, Kobalt, Verbindungen des Kobalts, Kupfer und Verbindungen des Kupfers. Eisen-Zeolith-Katalysatoren sind besonders bevorzugt. Bevorzugt ist der SCR-Katalysator für NOₓ in einer solchen Menge und mit einer solchen Speicherkapazität vorhanden, dass er in seiner Wirkung als Speichermedium für NOₓ mindestens 20%, bevorzugter mindestens 30 %, noch bevorzugter mindestens 50 %, und insbesondere mindestens 70%, der molaren Gesamtmenge des während des Aufdrückens der Anlage insgesamt anfallenden NOₓ temporär gleichzeitig speichern kann, vorzugsweise durch Pysisorption und/oder Chemiesorption.

Bevorzugt sind Speichermedium für NOₓ und SCR-Katalysator zur Reduktion von NOₓ ein und dasselbe Element und/oder in einem Gasreinigungssystem angeordnet, in welches das aus dem Absorptionsturm der Anlage zur Herstellung von Salpetersäure stammende Restgas eingeleitet wird.

Ganz besonders bevorzugt weist das Gasreinigungssystem einen mit Eisen beladenen Zeolith als SCR-Katalysator auf und das Gasreinigungssystem ist an einer solchen Stelle stromabwärts des Absorptionsturms im Restgasstrang der Anlage zur Herstellung von Salpetersäure positioniert, bei welcher das Restgas im stationären Betrieb eine Temperatur (T_{B}) von mindestens 300°C, bevorzugt mindestens 350°C, insbesondere mindestens 400°C aufweist.

## Patentansprüche

1. Ein Verfahren zur Verminderung der Konzentration von Stickoxiden in Restgas,
welches während des Anfahrens einer Anlage zur Herstellung von Salpetersäure anfällt; wobei das Restgas NOₓ enthält und wobei das Restgas während des Anfahrens der Anlage anfällt und dabei von einer Starttemperatur T₀ unter Durchlaufen einer Grenztemperatur T_{G} schließlich bis auf eine Betriebstemperatur T_{B} erwärmt wird durch Maßnahmen zur Rückgewinnung der bei der Ammoniakoxidation anfallenden Reaktionsenergie im Prozess zur Herstellung von Salpetersäure, bei welcher Betriebstemperatur T_{B} anschließend ein stationärer Betrieb der Anlage erfolgt;
wobei das Verfahren folgende Schritte umfasst:
(a) Überleiten des NOₓ-enthaltenden Restgases über ein Speichermedium für NOₓ und Speichern zumindest eines Teils des NOₓ in dem Speichermedium für NOₓ, solange die Temperatur des Restgases kleiner als die Grenztemperatur T_{G} ist;
(b) ggf. Freisetzen des in Schritt (a) gespeicherten NOₓ;
(c) Zusammenbringen des NOₓ mit einem Reduktionsmittel für NOₓ in Gegenwart eines SCR-Katalysators in Abhängigkeit einer gemessenen Temperatur des Restgases, nachdem die Temperatur des Restgases die Grenztemperatur T_{G} überschritten hat, wodurch zumindest ein Teil des NOₓ katalytisch reduziert wird.

2. Das Verfahren nach Anspruch 1, wobei
T₀ < 120°C und/oder
120°C ≤ T_{G} < 300°C und/oder
300°C ≤ T_{B}.

3. Das Verfahren nach Anspruch 1 oder 2, wobei der SCR-Katalysator ein katalytisch aktives Material umfasst ausgewählt aus der Gruppe bestehend aus Eisen, Verbindungen des Eisens, Kobalt, Verbindungen des Kobalts, Kupfer und Verbindungen des Kupfers.

4. Das Verfahren nach einem der vorstehenden Ansprüche, wobei der SCR-Katalysator ein Aluminiumsilikat umfasst.

5. Das Verfahren nach Anspruch 4, wobei das Aluminiumsilikat einen Zeolith umfasst.

6. Das Verfahren nach einem der vorstehenden Ansprüche, wobei der SCR-Katalysator als Speichermedium für NOₓ wirkt; und/oder umfassend die Einstellung des Oxidationsgrads des NOₓ.

7. Das Verfahren nach einem der vorstehenden Ansprüche, wobei das Reduktionsmittel für NOₓ Ammoniak umfasst.

8. Das Verfahren nach einem der vorstehenden Ansprüche, wobei in Schritt (c) die Konzentration von NOₓ im Restgas gemessen wird, bevor das Restgas mit dem SCR-Katalysator in Kontakt gebracht wird, und wobei in Abhängigkeit der gemessenen Konzentration von NOₓ die Menge des zugeführten Reduktionsmittels für NOₓ so dosiert wird, dass eine Akkumulation des Reduktionsmittels auf dem SCR-Katalysator verhindert wird.

9. Das Verfahren nach einem der vorstehenden Ansprüche, wobei die Anlage ein Gasreinigungssystem zur Verminderung der Konzentration von NOₓ und N₂O in Restgas umfasst, welches im Anschluss an das Anfahren der Anlage während des stationären Betriebs der Anlage anfällt und, wobei der SCR-Katalysator in dem Gasreinigungssystem angeordnet ist.

10. Ein Verfahren zur Verminderung der Konzentration von NOₓ und N₂O in Restgas, welches während des Anfahrens einer Anlage zur Herstellung von Salpetersäure und im Anschluss daran während des stationären Betriebs der Anlage anfällt umfassend das Verfahren nach einem der Ansprüche 1 bis 9.

11. Das Verfahren nach Anspruch 10, wobei während des stationären Betriebs der Anlage
(i) N₂O katalytisch in O₂ und N₂ zersetzt und NOₓ katalytisch in Gegenwart eines Reduktionsmittels für NOₓ reduziert wird; oder
(ii) N₂O katalytisch in Gegenwart eines Reduktionsmittels für N₂O reduziert und NOₓ katalytisch in Gegenwart eines Reduktionsmittels für NOₓ reduziert wird; oder
(iii) N₂O katalytisch in O₂ und N₂ zersetzt wird und anschließend restliches N₂O katalytisch in Gegenwart eines Reduktionsmittels für N₂O weiter reduziert und NOₓ katalytisch in Gegenwart eines Reduktionsmittels für NOₓ reduziert wird.

12. Das Verfahren nach Anspruch 11, wobei die Anlage ein Gasreinigungssystem zur Verminderung der Konzentration von NOₓ und N₂O in Restgas aufweist, welches während des stationären Betriebs einer Anlage zur Herstellung von Salpetersäure anfällt, wobei
(i) das Gasreinigungssystem einen zweistufigen Aufbau aufweist, wobei während des stationären Betriebs der Anlage in Strömungsrichtung des Restgases in der ersten Stufe N₂O katalytisch in O₂ und N₂ zersetzt wird, nach der ersten Stufe ein Reduktionsmittel für NOₓ mit dem Restgas vermischt wird und sodann in einer zweiten Stufe NOₓ katalytisch in Gegenwart des Reduktionsmittels reduziert wird; oder
(ii) während des stationären Betriebs der Anlage das Restgas im Gasreinigungssystem mit einem Reduktionsmittel für NOₓ sowie einem Kohlenwasserstoff, Kohlenmonoxid, Wasserstoff oder einem Gemisch dieser Gase als Reduktionsmittel für N₂O vermischt wird, wobei das Reduktionsmittel in einer solchen Menge zugegeben wird, die mindestens zur vollständigen Reduktion des NOₓ ausreicht, und dass das Gasgemisch über mindestens eine Reaktionszone geleitet wird, die einen SCR-Katalysator für die Reduktion von NOₓ und für die Reduktion von N₂O umfasst; oder
(iii) das Gasreinigungssystem einen zweistufigen Aufbau aufweist, wobei während des stationären Betriebs der Anlage in Strömungsrichtung des Abgases in der ersten Stufe N₂O katalytisch in O₂ und N₂ zersetzt wird, und das Abgas nach der ersten Stufe mit einem Reduktionsmittel für NOₓ sowie einem Kohlenwasserstoff, Kohlenmonoxid, Wasserstoff oder einem Gemisch dieser Gase als Reduktionsmittel für N₂O vermischt wird, wobei das Reduktionsmittel in einer solchen Menge zugegeben wird, die mindestens zur vollständigen Reduktion des NOₓ ausreicht, und dass das Gasgemisch über mindestens eine Reaktionszone geleitet wird, die einen Katalysator für die Reduktion von NOₓ und für die Reduktion von N₂O umfasst.

13. Eine Vorrichtung zur Verminderung der Konzentration von Stickoxiden in Restgas, welches während des Anfahrens einer Anlage zur Herstellung von Salpetersäure anfällt, wobei die Vorrichtung eingerichtet ist zur Erwärmung des Restgases von einer Starttemperatur T₀ bis auf eine Betriebstemperatur T_{B} durch Rückgewinnung der bei der Ammoniakoxidation anfallenden Reaktionsenergie im Prozess zur Herstellung von Salpetersäure, umfassend die Elemente:
A) ein Speichermedium für NOₓ mit einer Kapazität, welche ausreicht, so dass mindestens 5,0 Vol.-% des NOₓ, welches insgesamt während des Anfahrens in der Anlage zur Herstellung von Salpetersäure anfällt, in dem Speichermedium gespeichert werden können;
B) ggf. Mittel zum Freisetzen des gespeicherten NOₓ;
C) einen SCR-Katalysator zur Reduktion von NOₓ;
D) eine Regelungsvorrichtung umfassend eine Temperaturmessvorrichtung zur Bestimmung der Temperatur des Restgases und eine Dosiervorrichtung zur Dosierung eines Reduktionsmittels für NOₓ in Abhängigkeit von der gemessenen Temperatur des Restgases;
E) Mittel zum Zusammenbringen des Reduktionsmittels für NOₓ mit dem NOₓ in Gegenwart des SCR-Katalysators zum katalytischen Reduzieren zumindest eines Teils des NOₓ; und
F) ein Wärmetauscher konfiguriert zum Einbringen der bei der Ammoniakoxidation freigesetzten Reaktionswärme in das Restgas nach Verlassen des Absorptionsturms der Anlage zur Herstellung von Salpetersäure.

14. Die Vorrichtung nach Anspruch 13, wobei der SCR-Katalysator definiert ist wie in einem der Ansprüche 3 bis 6.

## Claims

1. A method of reducing the concentration of nitrogen oxides in tail gas which is obtained during the startup of a plant for preparation of nitric acid;
wherein the tail gas contains NOₓ and wherein the tail gas is obtained during the startup of the plant and is heated from a starting temperature T₀, passing through a threshold temperature T_{G} and finally up to an operating temperature T_{B} by measures for recovering the reaction energy arising during the oxidation of ammonia in the process for the production of the nitric acid, at which operating temperature T_{B} steady-state operation of the plant is subsequently effected;
wherein the method comprises the following steps:
(a) passing the NOₓ-containing tail gas through a storage medium for NOₓ and storing at least a portion of the NOₓ in the storage medium for NOₓ while the temperature of the tail gas is lower than the threshold temperature T_{G};
(b) optionally releasing the NOₓ stored in step (a);
(c) combining the NOₓ with a reducing agent for NOₓ in the presence of an SCR catalyst in dependence of a measured temperature of the tail gas after the temperature of the tail gas has exceeded the threshold temperature T_{G}, which results in catalytic reduction of at least a portion of the NOₓ.

2. The method as claimed in claim 1, wherein
T₀ < 120 °C and/or
120 °C ≤ T_{G} < 300 °C and/or
300 °C ≤ T_{B}.

3. The method as claimed in claim 1 or 2, wherein the SCR catalyst comprises a catalytically active material selected from the group consisting of iron, compounds of iron, cobalt, compounds of cobalt, copper and compounds of copper.

4. The method as claimed in any of the preceding claims, wherein the SCR catalyst comprises an aluminum silicate.

5. The method as claimed in claim 4, wherein the aluminum silicate comprises a zeolite.

6. The method as claimed in any of the preceding claims, wherein the SCR catalyst acts as storage medium for NOₓ and /or comprising the adjustment of the level of oxidation of the NOₓ.

7. The method as claimed in any of the preceding claims, wherein the reducing agent for NOₓ comprises ammonia.

8. The method as claimed in any of the preceding claims, wherein, in step (c), the concentration of NOₓ in the tail gas is measured before the tail gas is contacted with the SCR catalyst, and wherein, as a function of the concentration of NOₓ measured, the amount of the reducing agent for NOₓ supplied is metered in so as to prevent accumulation of the reducing agent on the SCR catalyst.

9. The method as claimed in any of the preceding claims, wherein the plant comprises a gas cleaning system for reducing the concentration of NOₓ and N₂O in tail gas which is obtained during the steady-state operation of the plant following the startup of the plant, and wherein the SCR catalyst is disposed in the gas cleaning system.

10. A method of reducing the concentration of NOₓ and N₂O in tail gas which is obtained during the startup of a plant for preparation of nitric acid and thereafter during the steady-state operation of the plant, comprising the method according to any of claims 1 to 9.

11. The method as claimed in claim 10, wherein, during the steady-state operation of the plant,
(i) N₂O is broken down catalytically to O₂ and N₂ and NOₓ is reduced catalytically in the presence of a reducing agent for NOₓ; or
(ii) N₂O is reduced catalytically in the presence of a reducing agent for N₂O and NOₓ is reduced catalytically in the presence of a reducing agent for NOₓ; or
(iii) N₂O is broken down catalytically to O₂ and N₂ and then residual N₂O is further reduced catalytically in the presence of a reducing agent for N₂O and NOₓ is reduced catalytically in the presence of a reducing agent for NOₓ.

12. The method as claimed in claim 11, wherein the plant has a gas cleaning system for reducing the concentration of NOₓ and N₂O in tail gas which is obtained during the steady-state operation of a plant for preparation of nitric acid, wherein
(i) the gas cleaning system has a two-stage construction, wherein N₂O is broken down catalytically to O₂ and N₂ in the first stage in flow direction of the tail gas during the steady-state operation of the plant, after the first stage a reducing agent for NOₓ is mixed with the tail gas and then, in a second stage, NOₓ is reduced catalytically in the presence of the reducing agent; or
(ii) during the steady-state operation of the plant, the tail gas is mixed in the gas cleaning system with a reducing agent for NOₓ as well as with a hydrocarbon, carbon monoxide, hydrogen, or a mixture of these gases as reducing agent for N₂O, wherein the reducing agent is added in such an amount which is sufficient at least for complete reduction of the NOₓ, and that the gas mixture is passed through at least one reaction zone comprising an SCR catalyst for the reduction of NOₓ and for the reduction of N₂O; or
(iii) the gas cleaning system has a two-stage construction, wherein, during the steady-state operation of the plant, in flow direction of the offgas, in the first stage, N₂O is broken down catalytically to O₂ and N₂, and the offgas, after the first stage, is mixed with a reducing agent for NOₓ as well as with a hydrocarbon, carbon monoxide, hydrogen, or a mixture of these gases as reducing agent for N₂O, wherein the reducing agent is added in such an amount which is sufficient at least for complete reduction of the NOₓ, and that the gas mixture is passed through at least one reaction zone comprising a catalyst for the reduction of NOₓ and for the reduction of N₂O.

13. An apparatus for reducing the concentration of nitrogen oxides in tail gas which is obtained during the startup of a plant for preparation of nitric acid, wherein the apparatus is arranged for heating the residual gas from a starting temperature T₀ to an operating temperature T_{B} by recovering the reaction energy arising during the oxidation of ammonia in the process for the production of nitric acid, comprising the elements:
A) a storage medium for NOₓ having a capacity sufficient such that at least 5.0 % by volume of the NOₓ which is obtained in total during the startup of the plant for preparation of nitric acid can be stored in the storage medium;
B) optionally means of releasing the stored NOₓ;
C) an SCR catalyst for reduction of NOₓ;
D) a closed-loop control device comprising a temperature measurement device for determining the temperature of the tail gas and a metering device for metering in a reducing agent for NOₓ in dependence of the measured temperature of the tail gas; and
E) means of combining the reducing agent for NOx with the NOx in the presence of the SCR catalyst for catalytic reduction of at least a portion of the NOx,
F) a heat exchanger configured to introduce the heat of reaction released during the oxidation of ammonia into the tail gas after leaving the absorption tower of the plant for preparation of nitric acid.

14. The apparatus as claimed in claim 13, wherein the SCR catalyst is as defined in any of claims 3 to 6.

## Revendications

1. Procédé destiné à la diminution de la concentration d'oxydes d'azote dans un gaz résiduaire,
qui est produit pendant le démarrage d'une installation destinée à la production d'acide nitrique ; le gaz résiduaire contenant NOₓ et le gaz résiduaire étant produit pendant le démarrage de l'installation et étant alors chauffé, d'une température initiale T₀, en passant par une température limite T_{G}, finalement jusqu'à une température de fonctionnement T_{B} par des dispositions destinées à la récupération de l'énergie de réaction produite lors de l'oxydation de l'ammoniac dans le processus destiné à la production d'acide nitrique, à laquelle température de fonctionnement T_{B} a ensuite lieu un fonctionnement stationnaire de l'installation ;
le procédé comprenant les étapes suivantes :
(a) envoi du gaz résiduaire contenant NOₓ sur un milieu d'emmagasinage pour NOₓ et emmagasinage d'au moins une partie du NOₓ dans le milieu d'emmagasinage pour NOₓ, tant que la température du gaz résiduaire est inférieure à la température limite T_{G} ;
(b) éventuellement libération du NOₓ emmagasiné dans l'étape (a) ;
(c) réunion du NOₓ avec un réducteur pour NOₓ en présence d'un catalyseur SCR en fonction d'une température mesurée du gaz résiduaire, après que la température du gaz résiduaire a excédé la température limite T_{G}, ce par quoi au moins une partie du NOₓ est réduite catalytiquement.

2. Procédé selon la revendication 1, dans lequel
T₀ < 120 °C et/ou
120 °C ≤ T_{G} < 300 °C et/ou
300 °C ≤ T_{B}.

3. Procédé selon la revendication 1 ou 2, dans lequel le catalyseur SCR comprend une matière catalytiquement active choisie dans le groupe constitué par le fer, les composés du fer, le cobalt, les composés du cobalt, le cuivre et les composés du cuivre.

4. Procédé selon l'une quelconque des revendications précédentes, dans lequel le catalyseur SCR comprend un silicate d'aluminium.

5. Procédé selon la revendication 4, dans lequel le silicate d'aluminium comprend une zéolithe.

6. Procédé selon l'une quelconque des revendications précédentes, dans lequel le catalyseur SCR agit en tant que milieu d'emmagasinage pour NOₓ ; et/ou comprenant l'ajustement du degré d'oxydation du NOₓ.

7. Procédé selon l'une quelconque des revendications précédentes, dans lequel le réducteur pour NOₓ comprend l'ammoniac.

8. Procédé selon l'une quelconque des revendications précédentes, dans lequel dans l'étape (c) la concentration de NOₓ dans le gaz résiduaire est mesurée avant que le gaz résiduaire soit mis en contact avec le catalyseur SCR, et dans lequel en fonction de la concentration mesurée de NOₓ la quantité du réducteur pour NOₓ ajouté est dosée de telle façon qu'une accumulation du réducteur sur le catalyseur SCR est empêchée.

9. Procédé selon l'une quelconque des revendications précédentes, dans lequel l'installation comprend un système d'épuration de gaz destiné à la diminution de la concentration de NOₓ et N₂O dans un gaz résiduaire qui est produit à la suite du démarrage de l'installation pendant le fonctionnement stationnaire de l'installation, le catalyseur SCR étant disposé dans le système d'épuration de gaz.

10. Procédé destiné à la diminution de la concentration de NOₓ et N₂O dans un gaz résiduaire qui est produit pendant le démarrage d'une installation destinée à la production d'acide nitrique et à la suite de ce démarrage pendant le fonctionnement stationnaire de l'installation, comprenant le procédé selon l'une quelconque des revendications 1 à 9.

11. Procédé selon la revendication 10, dans lequel pendant le fonctionnement stationnaire de l'installation
(i) N₂O est décomposé catalytiquement en O₂ et N₂ et NOₓ est réduit catalytiquement en présence d'd'un réducteur pour NOₓ ; ou
(ii) N₂O est réduit catalytiquement en présence d'un réducteur pour N₂O et NOₓ est réduit catalytiquement en présence d'un réducteur pour NOₓ ; ou
(iii) N₂O est décomposé catalytiquement en O₂ et N₂ et ensuite le N₂O résiduel est réduit davantage catalytiquement en présence d'un réducteur pour N₂O et NOₓ est réduit catalytiquement en présence d'un réducteur pour NOₓ.

12. Procédé selon la revendication 11, dans lequel l'installation comporte un système d'épuration de gaz destiné à la diminution de la concentration de NOₓ et N₂O dans un gaz résiduaire qui est produit pendant le fonctionnement stationnaire d'une installation destinée à la production d'acide nitrique, dans lequel
(i) le système d'épuration de gaz présente une structure à deux étages, dans laquelle pendant le fonctionnement stationnaire de l'installation N₂O est décomposé catalytiquement en O₂ et N₂ dans le premier étage en direction de flux du gaz résiduaire, après le premier étage un réducteur pour NOₓ est mélangé avec le gaz résiduaire et enduite dans un deuxième étage NOₓ est réduit catalytiquement en présence du réducteur ; ou
(ii) pendant le fonctionnement stationnaire de l'installation le gaz résiduaire est mélangé dans le système d'épuration de gaz avec un réducteur pour NOₓ ainsi qu'un hydrocarbure, du monoxyde de carbone, de l'hydrogène ou un mélange de ces gaz en tant que réducteur pour N₂O, le réducteur étant ajouté en une quantité telle qu'elle est suffisante au moins pour la réduction totale du NOₓ, et le mélange de gaz est envoyé sur au moins une zone de réaction qui comprend un catalyseur SCR pour la réduction de NOₓ et pour la réduction de N₂O ; ou
(iii) le système d'épuration de gaz présente une structure à deux étages, dans laquelle pendant le fonctionnement stationnaire de l'installation N₂O est décomposé catalytiquement en O₂ et N₂ dans le premier étage en direction de flux du gaz rejeté, et le gaz rejeté est mélangé, après le premier étage, avec un réducteur pour NOₓ ainsi qu'un hydrocarbure, du monoxyde de carbone, de l'hydrogène ou un mélange de ces gaz en tant que réducteur pour N₂O, le réducteur étant ajouté en une quantité telle qu'elle est suffisante au moins pour la réduction totale du NOₓ, et le mélange de gaz est envoyé sur au moins une zone de réaction qui comprend un catalyseur pour la réduction de NOₓ et pour la réduction de N₂O.

13. Dispositif destiné à la diminution de la concentration d'oxydes d'azote dans un gaz résiduaire qui est produit pendant le démarrage d'une installation destinée à la production d'acide nitrique, le dispositif étant conçu pour le chauffage du gaz résiduaire, d'une température initiale T₀ jusqu'à une température de fonctionnement T_{B} par récupération de l'énergie de réaction produite lors de l'oxydation de l'ammoniac dans le processus destiné à la production d'acide nitrique, comprenant les éléments :
A) un milieu d'emmagasinage pour NOₓ, ayant une capacité qui est suffisante pour qu'au moins 5,0 % en volume du NOₓ qui est produit au total pendant le démarrage dans l'installation destinée à la production d'acide nitrique, puissent être emmagasinés dans le milieu d'emmagasinage ;
B) éventuellement un moyen destiné à la libération du NOₓ emmagasiné ;
C) un catalyseur SCR destiné à la réduction de NOₓ ;
D) un dispositif de régulation comprenant un dispositif de mesure de la température destiné à la détermination de la température du gaz résiduaire et un dispositif doseur destiné à l'addition dosée d'un réducteur pour NOₓ en fonction de la température mesurée du gaz résiduaire ;
E) un moyen destiné à la réunion du réducteur pour NOₓ avec le NOₓ en présence du catalyseur SCR destiné à la réduction catalytique d'au moins une partie du NOₓ ; et
F) un échangeur thermique configuré pour l'introduction de la chaleur de réaction libérée lors de l'oxydation de l'ammoniac dans le gaz résiduaire après avoir quitté le tour d'absorption de l'installation destinée à la production d'acide nitrique.

14. Dispositif selon la revendication 13, dans laquelle le catalyseur SCR est tel que défini dans l'une quelconque des revendications 3 à 6.
